# EUROPEAN PATENT APPLICATION

(11) **EP 4 539 242 A1**
(43) Date of publication of application: **16.04.2025**
(21) Application number: 23865753.0
(22) Date of filing: 23.08.2023
(51) Int. Cl.: H01M 50/507, H01M 50/24, H01M 10/613, H01M 10/6551, H01M 10/6567, H01M 50/367, H01M 50/595, H01M 50/204

(54) **BATTERY MODULE, BATTERY PACK INCLUDING SAME, AND METHOD FOR MANUFACTURING BATTERY MODULE**

(30) Priority: 13.09.2022 KR 20220115057; 21.08.2023 KR 20230109015
(71) Applicant: LG Energy Solution, Ltd., Seoul 07335 (KR)
(72) Inventor: LEE, Jung Hoon, Daejeon 34122 (KR); UM, Taeki, Daejeon 34122 (KR); RYU, Jaeuk, Daejeon 34122 (KR)
(74) Representative: Plasseraud IP
(86) International application number: PCT/KR2023/012450
(87) International publication number: WO 2024/058454

(57) **Abstract**

The present disclosure includes a battery module and a battery pack including the same, and the battery module according to one embodiment of the present disclosure includes: a first sub-module and a second sub-module which each include a battery cell stack in which a plurality of battery cells are stacked, and a busbar assembly including a busbar that electrically connects the battery cells and a busbar frame that covers the battery cell stack on at least one side; a module frame that houses the first sub-module and the second sub-module; a sealing assembly that covers opened both ends of the module frame; and an end plate that covers the sealing assembly, wherein one end of the first sub-module and the other end of the second sub-module are electrically connected to each other.

## Description

### [TECHNICAL FIELD]

### Cross Citation with Related Application(s)

This application claims priority to and the benefit of Korean Patent Application No. 10-2022-0115057 filed on September 13, 2022 and Korean Patent Application No. 10-2023-0109015 filed on August 21, 2023 in the Korean Intellectual Property Office, the disclosures of which are hereby incorporated by reference in their entirety.

The present disclosure relates to a battery module, a battery pack including the same, and a method of manufacturing the battery module, and more particularly, to a battery module having improved energy density, cooling efficiency and safety, a battery pack including the same, and a method of manufacturing the battery module.

### [BACKGROUND]

As the technology development of and the demand for mobile devices have increased, the demand for secondary batteries as energy sources has rapidly increased. A variety of researches on batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

In recent years, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series and/or in parallel.

Meanwhile, when a plurality of battery cells are connected in series or in parallel to configure a battery pack, it is common to configure a battery module composed of at least one battery cell first and then configure a battery pack by using at least one battery module and adding other components.

Since battery cells constituting such a medium- or large-sized battery module are composed of secondary batteries which can be charged and discharged, such a high-output large-capacity secondary battery generates a large amount of heat during a charging and discharging process. In this case, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charge and discharge. When the heat dissipation of battery cells is not properly performed, deterioration of the battery cells is accelerated, the life is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly disposed to increase the mileage of the vehicle, a flame or heat generated in any one of the battery modules can easily propagate to an adjacent battery module, which may eventually lead to ignition or explosion of the battery pack itself.

Further, the battery pack is composed of a structure in which a plurality of battery modules are combined, and thus is heavy and is unsuitable for loading a large number of batteries into a moving means such as an automobile, and needs to improve energy density.

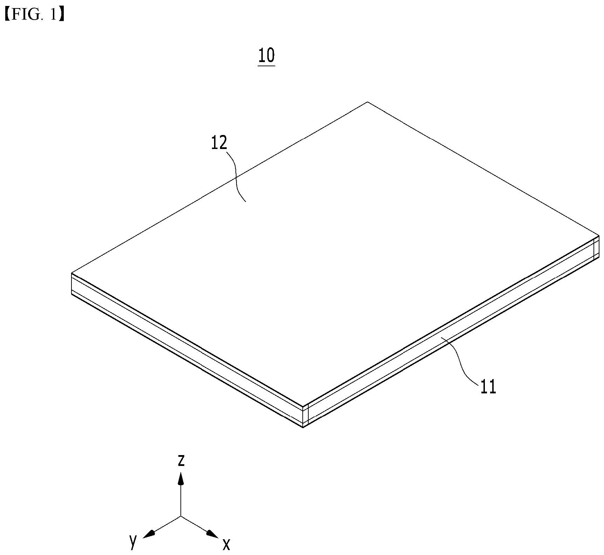

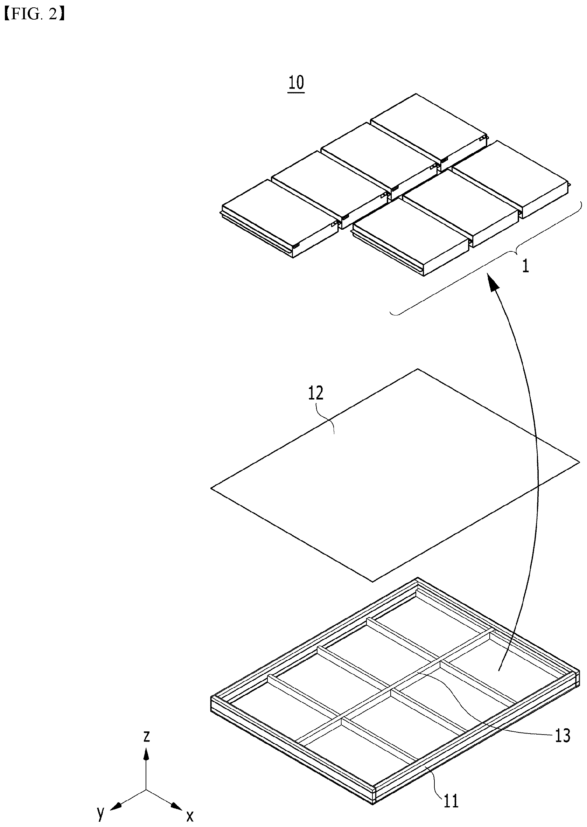

FIG. 1 is a diagram showing a conventional battery pack. FIG. 2 is an exploded perspective view of the battery pack of FIG. 1.

Referring to FIGS. 1 and 2, a conventional battery pack 10 includes a lower pack frame 11 on which a plurality of battery modules 1 are mounted, an upper pack frame 12 located on an upper part of the battery module 1, and an internal beam 13 that partitions the position where the battery module 1 is mounted within the battery pack 10.

When the battery module 1 is mounted within the battery pack 10 in this way, since the energy density of the battery pack 10 is reduced due to the internal beams 13 that partition the battery modules 1, there is a problem that more battery packs 10 need to be provided in order to meet the efficiency required for devices, etc. Furthermore, due to the weight of the battery packs 10, there is a limit to the number of battery packs 10 that can be provided in the device. Therefore, it is necessary to reduce the weight of the battery pack 10 and at the same time, reduce the energy density of the battery pack 10, so that a greater number of battery modules 1 must be mounted within the battery pack 10.

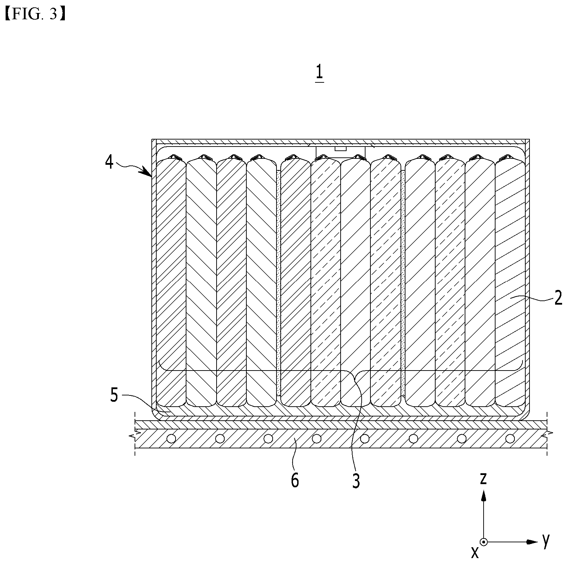

FIG. 3 is a diagram showing the battery module of FIG. 2.

Referring to FIG. 3, a conventional battery module 1 includes a battery cell stack 3 including battery cells 2 stacked in a preset direction, and a module frame 4 that houses the battery cell stack 3, wherein the battery cell stack 3 is fixedly located on a thermally conductive resin layer 5 located on a lower surface of the module frame 4. In this case, in order to cool the heat generated in the battery cell stack 3, a heat sink 6 may be provided in contact with the bottom of the module frame 4 located in the -z-axis direction of FIG. 3.

However, since the heat sink 6 does not receive heat transfer while being in direct contact with the battery cell stack 3, it has the disadvantage that its cooling efficiency is not very high. Therefore, there is a need for a method to more effectively cool the battery module 1.

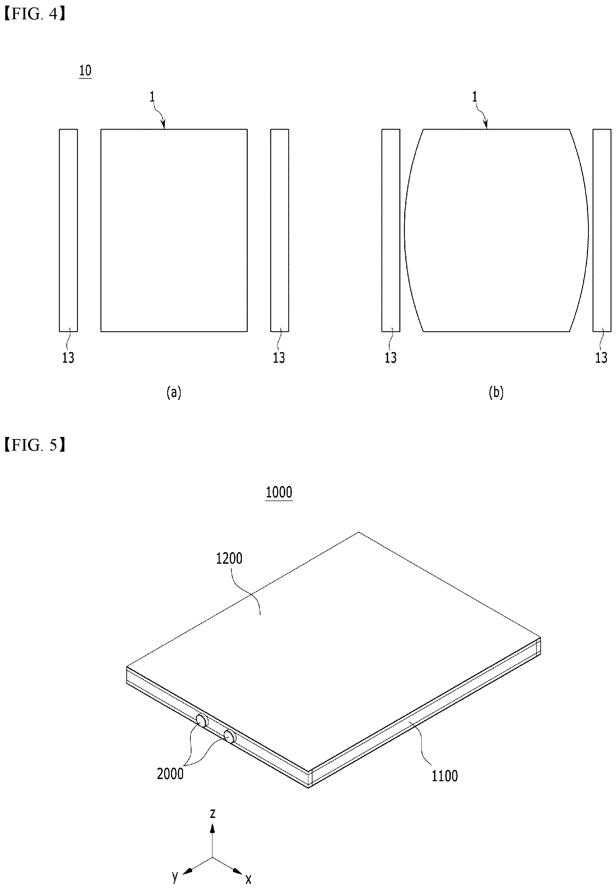

FIG. 4 is a diagram showing a battery module and an internal beam mounted on the battery pack of FIG. 2. FIG. 4(a) is a diagram showing the battery module and internal beam before charge and discharge, and FIG. 4(b) is a diagram showing the battery module and internal beam after charge and discharge.

Referring to FIG. 4(a), the battery module 1 before charge and discharge may be in a state where it does not come into contact with adjacent internal beams 13. On the other hand, when charge and discharge of the battery progress, heat is generated in the battery module 1, and this heat may not be sufficiently cooled from the heat sink 6 in FIG. 3. Further, referring to FIG. 4(b), in the battery module 1, gas may be generated inside the battery cell to cause a swelling phenomenon, so that the battery module 1 can come into contact with adjacent internal beams 13, which poses a risk of damaging the battery module 1.

Putting the above together, it can be seen that in order to improve the safety of a battery module and a battery pack, more effective methods for improving the cooling efficiency of the battery module are needed.

### [DETAILED DESCRIPTION OF THE INVENTION]

### [Technical Problem]

It is an object of the present disclosure to provide a battery module that is improved in energy density and cooling efficiency and enhanced in safety, a battery pack including the same, and a method of manufacturing the battery module.

However, the technical problems to be solved by embodiments of the present disclosure are not limited to the above-described problems, and can be variously expanded within the scope of the technical idea included in the present disclosure.

### [Technical Solution]

According to one embodiment of the present disclosure, there is provided a battery module comprising: a first sub-module and a second sub-module which each include a battery cell stack in which a plurality of battery cells are stacked, and a busbar assembly including a busbar that electrically connects the battery cells and a busbar frame that covers the battery cell stack on at least one side; a module frame that houses the first sub-module and the second sub-module; a sealing assembly that covers opened both ends of the module frame; and an end plate that covers the sealing assembly, wherein one end of the first sub-module and the other end of the second sub-module are electrically connected to each other.

In the battery module according to one embodiment of the present disclosure, a cooling fin is located between two battery cells adjacent to each other within the battery cell stack, and the cooling fin may include a plate that is adhesively fixed to one side surface of the battery cell.

The cooling fin further comprises a protrusion part protruding from one end of the plate, and the protrusion part is extended protrusively in parallel to the stacking direction of the battery cell stack.

The protrusion part may be located while being in contact with an upper surface or a lower surface of the module frame, and the other end of the plate may be located while being in contact with a lower part or an upper part of the module frame.

The upper part and the lower part of the battery cell may be located while having a prescribed height from the upper surface and the lower surface of the module frame and being in contact with the plate.

A space is provided between the upper surface of the module frame and the upper part of the battery cell, and between the lower surface of the module frame and the lower part of the battery cell, and a coolant may move into the space.

A first electrode lead located at the other end of the first sub-module and a second electrode lead located at one end of the second sub-module may be electrically connected to each other.

The first electrode lead may include a first outermost electrode lead derived from an outermost battery cell of the battery cell stack constituting the first sub-module, and the second electrode lead may include a second outermost electrode lead derived from an outermost battery cell of the battery cell stack constituting the second sub-module.

The first electrode leads are formed in a plurality of number, and the first electrode leads excluding the first outermost electrode lead may be electrically connected while forming a pair with adjacent first electrode leads, and the second electrode leads are formed in a plurality of numbers, and the second electrode leads excluding the second outermost electrode lead may be electrically connected while forming a pair with adjacent second electrode leads.

The sealing assembly includes a first sealing assembly covering one open end of the module frame, and a second sealing assembly covering the other open end of the module frame, the first sealing assembly may include an inlet, which is a hole through which coolant flows into, and the second sealing assembly may include an outlet, which is a hole through which coolant is discharged.

The inlet may be located at a lower part than a center part on the basis of the height of the first sealing assembly, and the outlet may be located at an upper part than a center part on the basis of the height of the second sealing assembly.

The inlet and the outlet may be located on the same line, the inlet may be located at an upper part than a center part on the basis of the height of the first sealing assembly, and the outlet may be located at an upper part than a center part on the basis of the height of the second sealing assembly.

The coolant may be in direct contact with the battery cell stack and the busbar assembly housed inside the module frame.

The coolant may be an insulating oil.

In the battery module according to one embodiment of the present disclosure, a first sealing member may be interposed along an edge of the sealing assembly coupled with the opened both ends of the module frame.

The first sealing member may be an adhesive tape.

The battery module according to one embodiment of the present disclosure may comprise: a second sealing member located to fill a gap located at an area excluding the area sealed by the first sealing member, among the area between the module frame and the sealing assembly.

The battery module according to one embodiment of the present disclosure may comprise a third sealing member interposed along edges of the sealing assembly and the end plate.

The third sealing member may be an epoxy resin.

In the battery module according to one embodiment of the present disclosure, the sealing assembly comprises a module venting part provided in one area of the sealing assembly, the module venting part may comprises a venting hole passing through the sealing assembly, a module connection part, which is one hole communicating with the venting hole, a fixing cover provided between the venting hole and the busbar assembly and fixed to the inner surface of the sealing assembly, and a membrane provided between the venting hole and the fixing cover and fixed in contact with the fixing cover.

The module connection part protrudes from the sealing assembly in a direction opposite to the module frame, and the battery module may further comprise a venting protrusion part, which is an area surrounding the module connection part and protruding from the sealing assembly in a direction opposite to the module frame.

The end plate covering the module connection part and the sealing assembly provided with the protrusion part includes a venting opening, the venting opening is a hole passing through the end plate, and the module connection part and the protrusion part may be located while passing through the venting opening.

According to another embodiment of the present disclosure, there is provided a battery pack comprising: the above-mentioned battery module, and a pack venting part connected to the battery module.

The pack venting part may comprise a pack connection part connected to the battery module, a direction adjustment part which is a pipe communicating with the pack connection part, and a discharge port provided in one area of the side surface pack frame and connected to the direction adjustment part.

The direction adjustment part is located inside the side surface pack frame, one end of the direction adjustment part is closed, and the other end of the direction adjustment part is connected to the discharge port, the pack connection part may be one area protruding from one surface of the direction adjustment part toward the battery module.

The pack connection part is connected to the module connection part of the battery module, and the module connection part may be a hole that communicates with the inside of the battery module.

### [Advantageous Effects]

According to the embodiments, respective battery modules can be electrically connected to improve the energy density of the battery pack.

In addition, the upper and lower surfaces of the battery cell can be cooled more effectively, thereby improving cooling efficiency and ensuring the safety of the battery module and battery pack.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a diagram showing a conventional battery pack.
FIG. 2 is an exploded perspective view of the battery pack of FIG. 1.
FIG. 3 is a diagram showing the battery module of FIG. 2.
FIG. 4 shows the battery module and internal beam mounted on the battery pack of FIG. 2. FIG. 4(a) is a diagram showing the battery module and internal beam before charge and discharge, and FIG. 4(b) is a diagram showing the battery module and internal beam after charge and discharge.
FIG. 5 is a perspective view of a battery pack according to an embodiment of the present disclosure.
FIG. 6 is an exploded perspective view of the battery pack of FIG. 5.
FIG. 7 is a diagram showing that a battery module is mounted with reference to the upper surface of the battery pack of FIG. 5. FIG. 7(a) is a plan view showing that a battery module is mounted on a conventional battery pack of FIG. 1. FIG. 7(b) is a plan view showing that a battery module is mounted on the battery pack of FIG. 5.
FIG. 8 is a perspective view of a battery module according to an embodiment of the present disclosure.
FIG. 9 is an exploded perspective view of the battery module of FIG. 8.
FIG. 10 is a perspective view showing a state where a coolant is located within the battery module.
FIG. 11 is a perspective view of the battery module excluding the module frame of FIG. 8.
FIG. 12 is a perspective view of a sub-module constituting a battery module according to an embodiment of the present disclosure.
FIG. 13 is an exploded view of the sub-module of FIG. 12.
FIG. 14 is a cross-sectional view of FIG. 10 viewed along the x-axis.
FIG. 15 is a perspective view of the battery module in FIG. 11 to which a side plate is added.
FIG. 16 is an exploded perspective view of the battery module of FIG. 15.
FIG. 17 is a diagram showing that FIG. 15 is inserted into a module frame.
FIG. 18 is a diagram showing the inside of an area A1 in FIG. 11.
FIG. 19 is a diagram showing an area A2 of FIG. 11.
FIG. 20 is a diagram showing the movement path of current in the battery module.
FIG. 21 is a perspective view showing that the first sealing assembly is mounted on one side of the module frame according to an embodiment of the present disclosure.
FIG. 22 is a diagram showing the process of assembling the first sealing assembly of FIG. 21. FIG. 22(a) is a diagram showing that the module connector is coupled to the first sealing cover. FIG. 22(b) is a diagram showing that the sensing unit is coupled to the first sealing cover. FIG. 22(c) is a diagram showing that both the module connector and the sensing unit are coupled to the first sealing cover.
FIG. 23 is a diagram showing a process in which the first sealing assembly of FIG. 21 is mounted on one surface of the module frame. FIG. 23(a) is a diagram showing that a sensing cable is electrically connected to a flexible printed circuit board. FIG. 23(b) is a view showing that the first sealing assembly is coupled to the module frame. FIG. 23(c) is a view showing sealing the first sealing assembly and the module frame.
FIG. 24 is an exploded perspective view showing that the first end plate is mounted on the first sealing assembly according to an embodiment of the present disclosure.
FIG. 25 is a view of the first end plate mounted on the first sealing assembly viewed in the -x-axis direction of FIG. 24.
FIG. 26 is a diagram showing an area A5 cut along the line B-B' in FIG. 25.
FIG. 27 is a diagram showing that the second sealing assembly is mounted on the other surface of the module frame according to an embodiment of the present disclosure.
FIG. 28 is an exploded perspective view showing that the second end plate is mounted on the second seal assembly according to an embodiment of the present disclosure.
FIG. 29 is a view of the second end plate mounted on the second sealing assembly viewed in the -x-axis direction of FIG. 28.
FIG. 30 is a diagram showing an area A6 cut along C-C' of FIG. 29.
FIG. 31 is an exploded perspective view of a second sealing assembly according to another embodiment of the present disclosure.
FIG. 32 is a diagram when FIG. 31 is viewed in the -y-axis direction.
FIG. 33 is a view showing that the second sealing assembly of FIG. 31 is coupled with the second end plate.
FIG. 34 is a perspective view showing the inside of a battery pack according to an embodiment of the present disclosure.
FIG. 35 is a diagram showing a pack venting part according to an embodiment of the present disclosure.
FIG. 36 is a cross-sectional view taken along the line D-D' of FIG. 34.
FIG. 37 is a perspective view of FIG. 34 viewed in the -z-axis direction.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, area, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

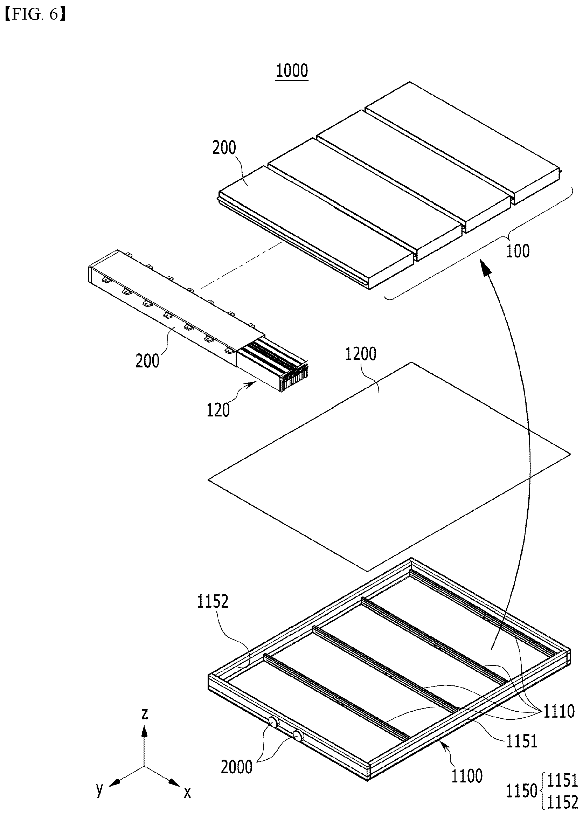

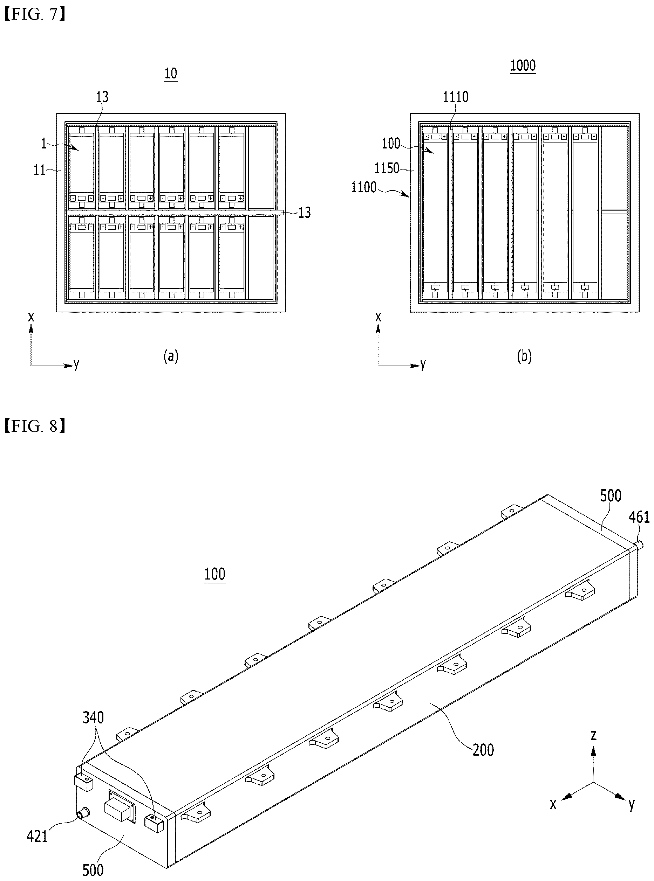

FIG. 5 is a perspective view of a battery pack according to an embodiment of the present disclosure. FIG. 6 is an exploded perspective view of the battery pack of FIG. 5. FIG. 7 is a diagram showing that a battery module is mounted with reference to the upper surface of the battery pack of FIG. 5.

Referring to FIGS. 5 and 6, a battery pack 1000 according to an embodiment of the present disclosure comprises a lower pack frame 1100 on which a plurality of battery modules 100 are mounted, an upper pack frame 1200 located on an upper part of the battery module 100, and at least one venting part 2000 provided on the side surface of the lower pack frame 1100. Herein, the lower pack frame 1100 and the upper pack frame 1200 can be coupled with each other by a method such as welding to seal the inside of the battery pack 1000.

The battery module 100 may include a battery cell stack 120 in which a plurality of battery cells are stacked along a preset direction, and a module frame 200 that houses the battery cell stack 120. The module frame 200 may be a metal plate-shaped mono-frame in which the upper and lower surfaces (z-axis direction and -z-axis direction) and both side surfaces (y-axis direction and -y-axis direction) are integrated. The battery cell stack 120 may be mounted inside the module frame 200 to form the battery module 100. However, the module frame 200 is not limited to the contents described above, and the module frame 200 may include an upper frame and a lower frame.

The lower pack frame 1100 includes a side surface pack frame 1150, and at least two internal beams 1110 formed on the bottom surface of the lower pack frame 1100. Herein, the bottom surface of the lower pack frame 1100 and the at least two internal beams 1110, and the bottom surface of the lower pack frame 1100 and the side surface pack frames 1150 may be coupled with each other by a method such as welding.

The plurality of battery modules 100 may be partitioned from each other by a side surface pack frame 1150 and at least two internal beams 1110. In other words, the plurality of battery modules 100 may be respectively arranged in an area between the internal beams 1110 of the side surface pack frame 1150 and in an area located between internal beams 1110 adjacent to each other. More specifically, in the battery pack 1000, the battery module 100 is arranged between a pair of internal beams 1110 located adjacent to each other among the plurality of internal beams 1110, and the battery module 100 may be arranged between the internal beam 1110 and the side surface pack frame 1150.

Accordingly, the plurality of battery modules 100 are also surrounded by at least two internal beams 1110 and the side surface pack frames 1150, so that each battery module 100 can be protected from external impacts.

The side surface pack frame 1150 may be arranged at the edge of the bottom surface of the lower pack frame 1100, and extended upward from the bottom surface of the lower pack frame 1100. More specifically, the side surface pack frames 1150 may be extended upward from each edge of the bottom surface of the lower pack frame 1100.

The upper end of the side surface pack frame 1150 may be in contact with the upper pack frame 1200. At this time, the upper end of the side surface pack frame 1150 and the upper pack frame 1200 can be coupled with each other by a method such as welding to seal the inside of the battery pack 1000.

The plurality of internal beams 1110 may be spaced apart from each other. Herein, the separation distance between internal beams 1110 adjacent to each other may be equal to or larger than the size of the battery module 100.

Further, the end of the internal beam 1110 may be in contact with the inner surface 1152 of the side surface pack frame 1150. More specifically, both ends of the internal beam 1110 may be in contact with the inner surface 1152 of the side surface pack frame 1150, respectively.

FIG. 7(a) is a plan view showing that a battery module is mounted on a conventional battery pack of FIG. 1. FIG. 7(b) is a plan view showing that a battery module is mounted on the battery pack of FIG. 5.

Referring to FIG. 7(a), the conventional battery pack 10 includes a plurality of battery modules 1 mounted between internal beams 13 that partition the lower pack frame 11. At this time, the internal beams 13 are arranged in the x-axis direction and the y-axis direction to partition the space inside the lower pack frame 11, and a plurality of battery modules 1 can be mounted between the spaces. At this time, one end and the other end of the battery module 1 may be located while being in contact with the inner surface of the lower pack frame 11 and the internal beams 13, or may be located while being slightly spaced apart. That is, the internal beams 13 may be located as shown in FIG. 7(a), and the weight of the battery pack 10 may increase due to the inclusion of the internal beam 13 extending in the y-axis direction. Thereby, there is a problem that the energy density of the battery pack 10 is low. Therefore, in order to solve the above problem, in the present embodiment, a plurality of conventional battery modules 1 can be connected as sub-modules to form one battery module 100 as shown in FIG. 7(b).

Specifically, referring to FIG. 7(b), the battery pack 1000 according to an embodiment of the present disclosure includes a plurality of battery modules 100 mounted between the internal beams 1110 that partition the lower pack frame 1100.

As described above, the battery module 100 may be configured to connect two battery modules 1 arranged in the x-axis direction in FIG. 7(a). In one example, the battery module 100 of the present embodiment can be configured such that respective battery cell stacks constituting the battery module 1 in FIG. 7(a) are electrically connected. That is, the two battery cell stacks constituting the two battery modules 1 of FIG. 7(a) may be electrically connected to each other. Therefore, the battery module 100 of the present embodiment may have a longer length in the x-axis than in the conventional battery module 1.

Summarizing the above, referring to FIG. 7(a), in the conventional battery pack 10, the internal beams 13 are arranged along the x-axis and y-axis to partition the space inside the lower pack frame 1100, and a plurality of battery modules 100 may be mounted between the spaces. Whereas, referring to FIG. 7(b), it can be seen that in the battery pack 1000 according to the present embodiment, the internal beams 1110 are not arranged in the y-axis direction, unlike the conventional battery pack 10. This is to ensure that because the length (x-axis direction) of the battery module 100 is increased compared to the conventional case, one end and the other end in the longitudinal direction (x-axis direction) of the battery module 100 are located in connect with the side surface pack frame 1150 or located while completely filling the space between the side surface pack frame 1150 and the end of the battery module 100, whereby the internal beams 1110 do not need to partition the battery module 100 along a direction (y-axis direction) perpendicular to the longitudinal direction (x-axis direction) of the battery module 100. That is, due to the structure of the above-mentioned battery module 100, the number of internal beams 1110 provided in the battery pack 1000 in the present embodiment is reduced compared to the conventional case, it can be seen that the weight of the battery pack 1000 decreases while the energy density increases.

Below, the battery module 100 according to an embodiment of the present disclosure will be described in detail.

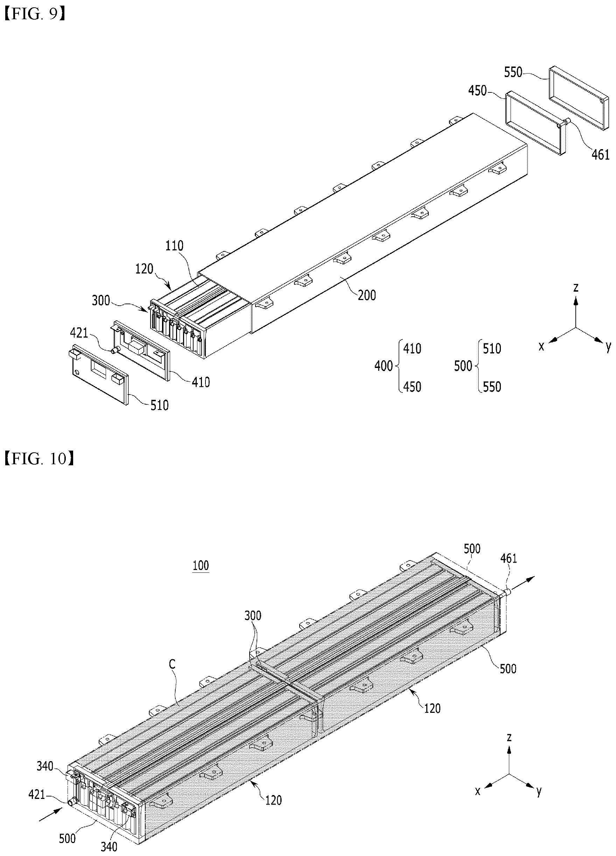

FIG. 8 is a perspective view of a battery module according to an embodiment of the present disclosure. FIG. 9 is an exploded perspective view of the battery module of FIG. 8.

Referring to FIGS. 8 and 9, the battery module 100 according to an embodiment of the present disclosure may be one in which a plurality of sub-modules corresponding to a conventional battery module are electrically connected to form one battery module 100. Specifically, the battery module 100 of the present embodiment may be one in which one end and the other end of respective battery cell stacks constituting two conventional battery modules are electrically connected.

The battery module 100 according to the present embodiment includes a battery cell stack 120 in which a plurality of battery cells 110 are stacked, a module frame 200 that houses the battery cell stack 120, a busbar assembly 300 located on a front surface and/or a rear surface of the battery cell stack 120, a sealing assembly 400 that covers a front surface and/or a rear surface of the busbar assembly 300, and an end plate 500 that covers a front surface and/or a rear surface of the sealing assembly 400.

First, the battery cell 110 may be a pouch-type battery cell. Such a pouch-type battery cell may be formed by housing an electrode assembly in a pouch case made of a laminate sheet including a resin layer and a metal layer, and then heat-sealing the sealing part of the pouch case. At this time, the battery cell 110 may be formed in a rectangular sheet structure.

Such battery cells 110 may be configured in a plurality of numbers, and the plurality of battery cells 110 are stacked so as to be electrically connected to each other, thereby forming a battery cell stack 120. In particular, as shown in FIG. 9, a plurality of battery cells 110 may be stacked along a direction parallel to the y-axis direction. As mentioned above, the direction in which the plurality of battery cells 110 are stacked can be defined as the width direction of the battery cell stack 120.

The module frame 200 can be for protecting the battery cell stack 120 and the electrical components connected thereto from external physical impacts. The module frame 200 can house the battery cell stack 120 and electrical components connected thereto in the internal space of the module frame 200.

The structure of the module frame 200 may vary. According to the present embodiment, the structure of the module frame 200 may be a mono frame structure. Herein, the mono frame may be in the form of a metal plate in which the upper surface, the lower surface and the both surfaces are integrated. The mono frame can be manufactured by extrusion molding.

However, the structure of the module frame 200 is not limited thereto, and in another example, the module frame 200 may have a structure in which a U-shaped frame and an upper plate are coupled. In this case, the U-shaped frame may be formed by combining or integrating the lower surface and both side surfaces of the module frame 200. At this time, each frame or plate constituting the U-shaped frame may be manufactured by press molding. Further, the structure of the module frame 200 may be provided in a mono frame or an L-shaped frame structure in addition to a U-shaped frame, and may be provided in various structures that are not described in the above-mentioned examples.

The module frame 200 may be provided in such a shape in which front and rear surfaces are opened along the longitudinal direction (x-axis direction) of the battery cell stack 120. In this case, the front surface and the rear surface of the battery cell stack 120 may not be hidden by the module frame 200. The front surface and the rear surface of the battery cell stack 120 may be hidden by a busbar assembly 300, a sealing assembly 400, or an end plate 500, etc., through which the front surface and the rear surface of the battery cell stack 120 will be protected from external physical impacts or the like.

The busbar assembly 300 includes a busbar frame 310 described later, and a busbar 330 mounted on one surface of the busbar frame 310. The busbar assembly 300 may be located on the opened first side (x-axis direction) and second side (-x-axis direction) of the module frame 200 to cover the battery cell stack 120. The busbar assembly 300 can electrically connect the battery cells 110 constituting the battery cell stack 120 in series or parallel.

The busbar assembly 300 may include a busbar frame 310, a busbar 330, and a terminal busbar 340, and the details will be described later.

The sealing assembly 400 may be located on the opened first side (x-axis direction) and second side (-x-axis direction) of the module frame 200 to cover the battery cell stack 120. The sealing assembly 400 located on the opened first side of the module frame 200 may be the first sealing assembly 410, and the sealing assembly 400 located on the opened second side of the module frame 200 may be a second sealing assembly 450.

The sealing assembly 400 may separate the opened first and second sides of the module frame 200 from the external environment. Specifically, when a coolant is injected into the module frame 200 described later, the sealing assembly 400 may perform the function to seal the coolant so as to prevent it from leaking to the outside.

The sealing assembly 400 may include a sealing cover and an inlet 421 and an outlet 461 through which coolant flows. Specifically, the coolant may flow into the module frame 200 through the inlet 421, and then be discharged outside the battery module 100 through the outlet 461. The coolant may be in direct contact with the battery cell stack 120, other electrical components, and the busbar assembly 300 mounted inside the module frame 200, and receive transfer of heat generated therefrom. The end plate 500 may be located on the opened first side (x-axis direction) and second side (-x-axis direction) of the module frame 200 to cover the sealing assembly 400. The end plate 500 located on the opened first side of the module frame 200 may be a first end plate 510, and the end plate 500 located on the opened second side of the module frame 200 may be a second end plate 550.

Such an end plate 500 can physically protect the battery cell stack 120 and other electrical components from external impacts.

FIG. 10 is a perspective view showing a state where a coolant is located within the battery module.

Referring to FIG. 10, in the battery module 100 according to the present embodiment, the coolant C flows into the module frame 200 through the inlet 421, and then may be discharged to the outside of the battery module 100 through the outlet 461. At this time, the coolant C may be a fluid. However, since the coolant C is in direct contact with the coolant, the battery cell stack 120, other electrical components, and the busbar assembly 300 within the battery module 100, it needs to be electrically insulated. Therefore, the coolant C may be a material that has insulating properties. In one example, the coolant C may be insulating oil.

As mentioned above, the coolant C is in direct contact with the battery cell stack 120, other electrical components, and the busbar assembly 300 that generate heat within the battery module 100, and can directly cool them while receiving transfer of heat. Therefore, compared to the conventional method of indirectly cooling the battery module using a heat sink, etc., the cooling efficiency can be improved and the battery life can be extended.

Below, each sub-battery module constituting the battery module 100 of the present embodiment will be described in more detail.

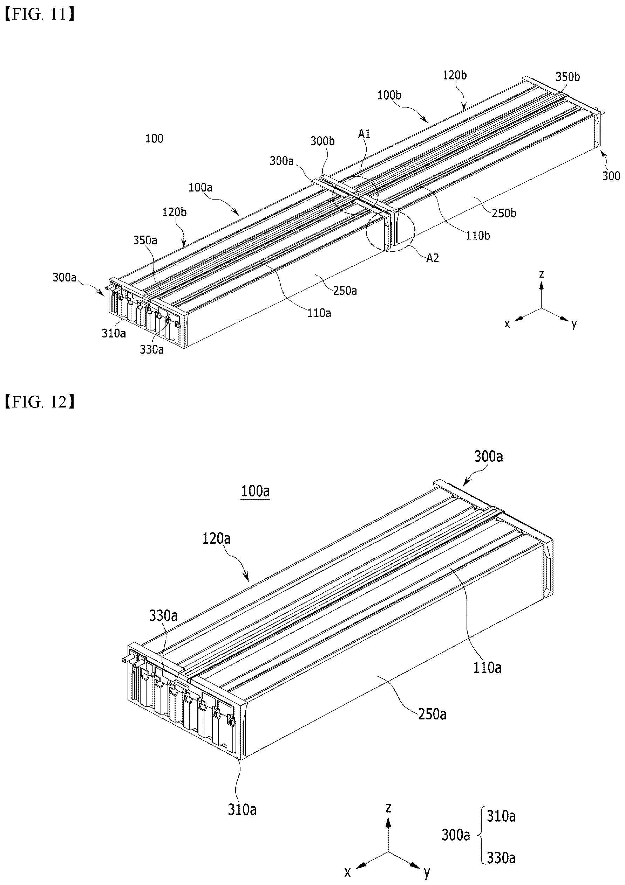

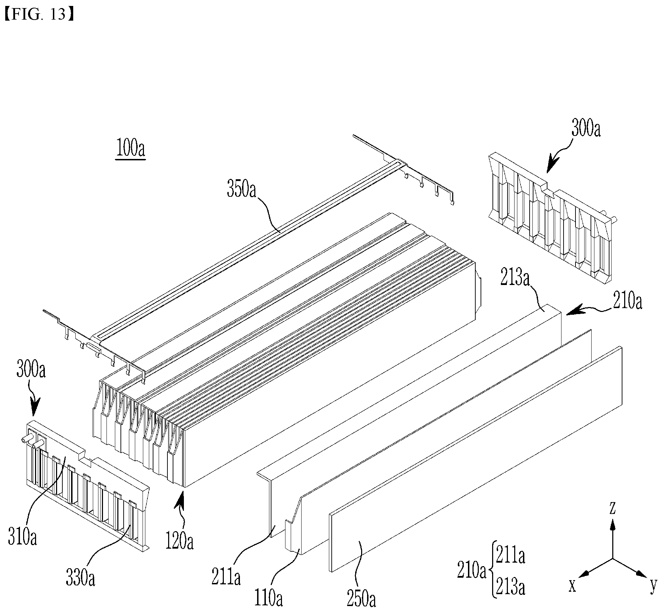

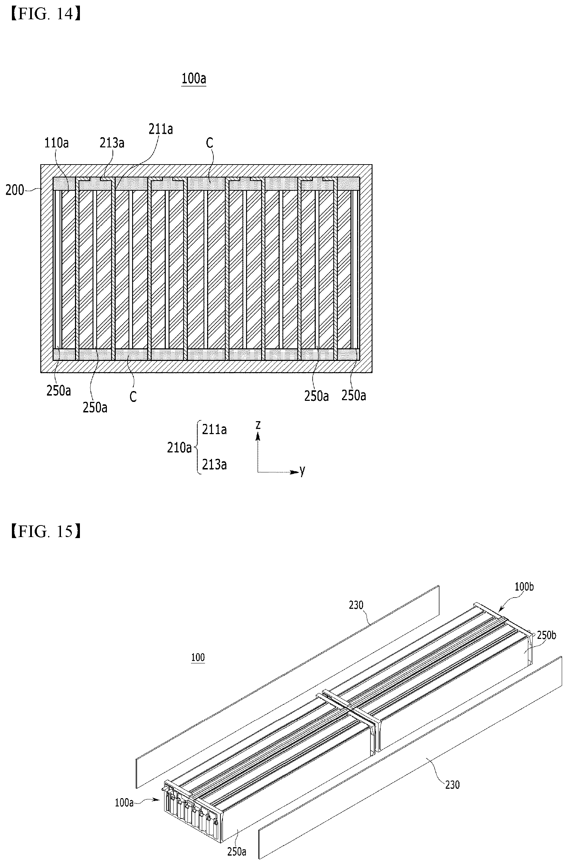

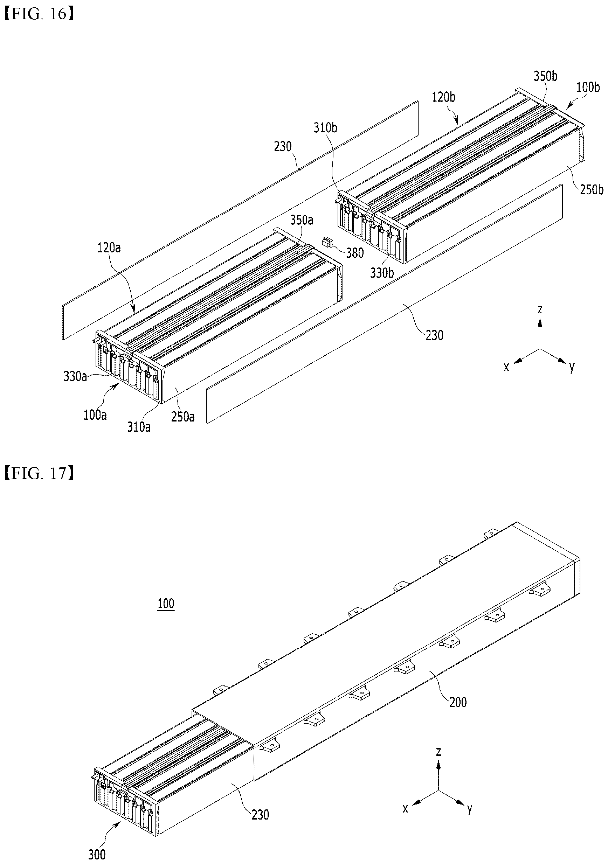

FIG. 11 is a perspective view of the battery module excluding the module frame of FIG. 8. FIG. 12 is a perspective view of a sub-module constituting a battery module according to an embodiment of the present disclosure. FIG. 13 is an exploded view of the sub-module of FIG. 12. FIG. 14 is a cross-sectional view of FIG. 10 viewed along the x-axis. FIG. 15 is a perspective view of the battery module in FIG. 11 to which a side plate is added. FIG. 16 is an exploded perspective view of the battery module of FIG. 15. FIG. 17 is a diagram showing that FIG. 15 is inserted into a module frame.

Referring to FIGS. 11 to 17, the battery module 100 according to an embodiment of the present disclosure may include a first sub-module 100a and a second sub-module 100b. Specifically, the battery module 100 may be one in which a first sub-module 100a and a second sub-module 100b are electrically coupled to each other.

The first sub-module 100a and the second sub-module 100b may each include a battery cell stack 120 in which a plurality of battery cells are stacked, and a busbar assembly 300 including a busbar 330 electrically connected to the battery cell stack 120 and a busbar frame 310 that covers the battery cell stack 120 on at least one side.

That is, the first sub-module 100a and the second sub-module 100b each include the same configuration, and the first sub-module 100a is mainly described below.

Referring to FIGS. 12 and 13, the first sub-module 100a includes a first battery cell stack 120a in which a plurality of battery cells 110 are stacked, a first busbar assembly 300a that covers the front surface (x-axis direction) and the rear surface (-x-axis direction) of the first battery cell stack 120a, and a first flexible printed circuit board (FPCB) 350a electrically connected to the first busbar assembly 300a.

The first battery cell stack 120a includes a plurality of first battery cells 110a, a first cooling fin 210a located between the plurality of first battery cells 110a, and a first compression pad 250a provided on one surface of the first outermost battery cell 110a.

The first cooling fin 210a may be located between the plurality of first battery cells 110a. For example, the first cooling fin 210a may be located for every two first battery cells 110a. Specifically, one first cooling fin 210a and the other first cooling fin 210a adjacent thereto may be located with two first battery cells 110a being interposed between them.

The first cooling fin 210a may include a first plate 211a in contact with one side surface of the first battery cell 110a. Herein, one side surface of the first battery cell 110a may be one surface of the battery cell 110 extending along the longitudinal direction (x-axis direction) of the first battery cell 110a.

One surface of the first plate 211a may be in contact with one side surface of the first battery cell 110a facing one surface of the first plate 211a. The other surface of the first plate 211a may be in contact with one surface of the other first battery cell 110a adjacent thereto while facing the other surface of the first plate 211a. In this case, although not illustrated in this figure, an adhesive member is interposed between the side surface of the first battery cell 110a and the first plate 211a, and the first battery cell 110a and the first plate 211a may be adhesively fixed. For example, the adhesive member may be an insulating tape.

The upper surface (z-axis direction) of the first plate 211a may be in contact with the upper surface (z-axis direction) of the module frame 200 of FIG. 17, and the lower surface of the first plate 211a may be in contact with the lower surface (-z-axis direction) of the module frame 200 of FIG. 17. Therefore, the first cooling fin 210a can be fixedly located within the module frame 200, whereby the first battery cell 110a attached to the first cooling fin 210a can also be fixedly located within the module frame 200.

The size of the first plate 211a may be larger than the size of the first battery cell 110a. That is, the height (z-axis direction) of the first plate 211a may be larger than the height of the first battery cell 110a. In this case, the first battery cell 110a may be attached onto the first plate 211a and located as if it floats inside the module frame 200 without being in contact with the module frame 200. Specifically, the upper part and the lower part of the first battery cell 110a may be located while having a prescribed height from the upper and lower parts of the module frame 200 and being in contact with the first plate 211a. More specifically, when the height (z-axis direction) of the first plate 211a is higher than the height (z-axis direction) of the first battery cell 110a, the first battery cell 110a can be adhesively fixed to the first plate 211a while being located at the center part thereof.

The first cooling fin 210a may further include a first plate 211a and a first protrusion part 213a where one end of the first plate 211a protrudes. Specifically, referring to FIG. 13, the first cooling fin 210a may include a first plate 211a having a surface corresponding to or larger than one surface of the first battery cell 110a, and a first protrusion part 213a that protrudes from one end of the first plate 211a to be in parallel to the stacking direction (y-axis direction) of the first battery cell stack 120a.

The first protrusion part 213a may be one area protruding in a direction perpendicular to the first plate 211a. The first protrusion part 213a may be one area that extends protrusively in parallel to the stacking direction of the first battery cell stack. The first protrusion part 213a may be in contact with an upper surface and/or a lower surface of the module frame 200. Specifically, one surface of the first protrusion part 213a may be located so as to face the upper part or the lower part of the first battery cell 110a, and the other surface of the first protrusion part 213a may be in contact with a lower surface or an upper surface of the module frame 200. For example, the first cooling fin 210a may have an L shape. Consequently, the first cooling fin 210a can be more firmly fixedly located within the module frame 200.

More specifically, one surface of the first protrusion part 213a may be located facing the first battery cell 110a. That is, one surface of the first protrusion part 213a is located facing the top of the first battery cell 110a, and the upper part and the lower part of the first battery cell 110a may be located to adhesively fix to the first plate 211a while having a prescribed height from the upper and lower surfaces of the module frame 200. In other words, a prescribed space may be provided between the upper surface of the module frame 200 and the upper part of the first battery cell 110a, and between the lower surface of the module frame 200 and the lower part of the first battery cell 110a, and a coolant C can move into the space. In this case, the distance between the upper surface of the module frame 200 and the upper part of the first battery cell 110a may correspond to the distance between the lower surface of the module frame 200 and the lower part of the first battery cell 110a.

The other surface of the first protrusion part 213a may be in contact with the upper surface of the module frame 200. Specifically, the other surface of the first protrusion part 213a may be adhesively fixed while being in contact with the upper surface of the module frame 200, whereby the first cooling fin 210a is more firmly and fixedly located within the module frame 200. In FIGS. 13 and 14, the case where the protrusion part 213a of the first cooling fin 210a is located between the upper surface of the module frame 200 and the upper part of the first battery cell 110a will be mainly described, but the protrusion part of the first cooling fin 210a may also be located between the lower surface of the module frame 200 and the lower part of the first battery cell 110a.

However, the shape of the first cooling fin 210a is not limited to those illustrated in the figure, and may have a flat plate shape, and the protrusion parts may be located at both the upper and lower parts of the first cooling fin 210a. That is, the shape of the first cooling fin 210a can be used without limitation as long as it can fix the first battery cell 110a while contacting the first battery cell 110a.

The first cooling fin 210a may be made of metal. Specifically, the first cooling fin 210a may be made of a metal with high thermal conductivity. Therefore, the first cooling fin 210a can directly receive transfer of heat generated in the first battery cell 110a during charging and discharging of the battery. When heat is generated, the heat is transferred to the first cooling fin 210a in contact with the side surface of the first battery cell 110a, and the first battery cell 110a is primarily cooled, and the coolant C may be secondarily cooled by directly contacting the upper and lower parts of the first battery cell 110a. As a result, direct cooling is possible even in the upper and lower edge areas of the battery cell, which were relatively difficult to cool in the past, thereby improving the cooling efficiency of the battery.

The first compression pad 250a may be located at the outermost part of the first battery cell stack 120a. When the first battery cell 110a swells due to charging and discharging, the first compression pad 250a may perform the function to absorb the swelling. Specifically, the first compression pad 250a pushes out the side surface part (y-axis direction and -y-axis direction) of the module frame 200 while the first battery cell 110a swells, thereby preventing the first battery cell 110a from being broken, and thus improving the safety of the battery module 100.

However, the first compression pad 250a is not limited to being located only at the outermost part of the first battery cell stack 120a, and it can also be located between the first battery cells 110a constituting the first battery cell stack 120a.

The first busbar assembly 300a includes a first busbar frame 310a and a first busbar 330a mounted on the first busbar frame 310a.

The first busbar frame 310a is located on a front surface and/or a rear surface of the first battery cell stack 120a along the x-axis direction, and may be for covering a front surface and/or a rear surface of the first battery cell stack 120a and at the same time, for guiding the connection between the first battery cell stack 120a and an external device. The first busbar assembly 300a may be located on a front surface (x-axis direction) and a rear surface (-x-axis direction) of the first battery cell stack 120a. A first busbar 330a may be mounted on the first busbar frame 310a. In specific examples, referring to FIGS. 11 and 15, the inner surface of the first busbar frame 310a may be connected to the front surface (x-axis direction) and the rear surface (-x-axis direction) of the first battery cell stack 120a, and the outer surface of the first busbar frame 310a may be connected to the first busbar 330a.

The first busbar frame 310a may include an electrically insulating material. The first busbar frame 310a may restrict contact with other parts of the first battery cells 110a other than the part where the first busbar 330a is joined to the electrode lead (not shown), and can prevent electrical short circuits from occurring.

The first busbar 330a can be mounted on one surface of the first busbar frame 310a to electrically connect the first battery cell stack 120a or the first battery cells 110a to an external device circuit. The first busbar 330a is located on the first busbar frame 310a, and the first busbar assembly 300a is covered by the sealing assembly 400 and the end plate 500, which will be described later, so that it can be protected from external impacts, etc., and can minimize the decrease in durability caused by external moisture or foreign materials.

The first busbar 330a may be electrically connected to the first battery cell stack 120a via the electrode lead of the first battery cell 110a. Specifically, the electrode lead of the first battery cell 110a passes through a slit formed in the first busbar frame 310a and then can be bent and connected to the first busbar 330a. The first battery cells 110a constituting the first battery cell stack 120a may be connected in series or in parallel by the first busbar 330a.

The first flexible printed circuit board 350a is configured such that it is extended and be mounted in the longitudinal direction (x-axis direction) of the first battery cell stack 120a to sense the first battery cell 110a. That is, as shown in FIGS. 12 and 13, the first flexible printed circuit board 350a can sense electrical and thermal data of the first battery cell 110a while being seated on the upper part (z-axis direction) of the first battery cell stack 120a. Further, the first flexible printed circuit board 350a is electrically connected to the first busbar 330a while being bent toward the first busbar frame 310a at the end of the first battery cell stack 120a.

The first sub-module 100a and the second sub-module 100b having the above configuration are electrically connected to each other to form one battery module 100.

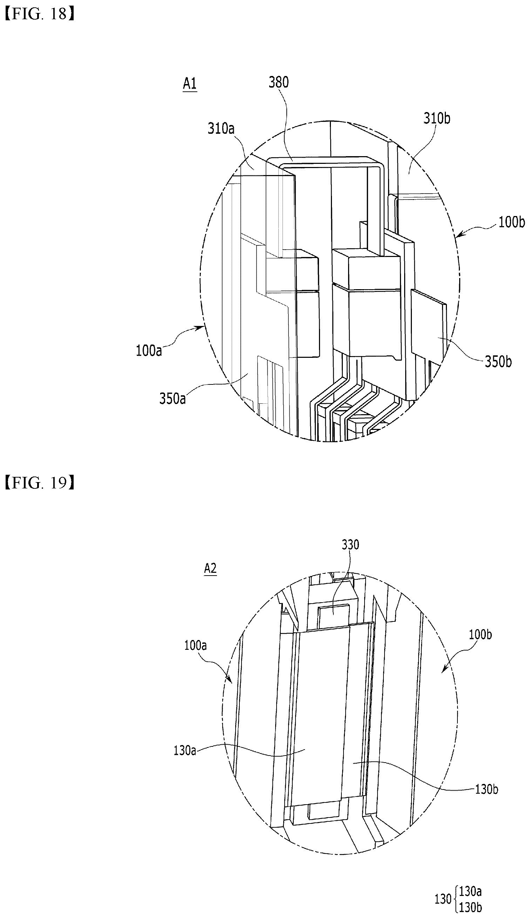

Referring to FIGS. 11, 15 and 16, the battery module 100 according to the present embodiment may be formed by electrically connecting the first sub-module 100a and the second sub-module 100b along the longitudinal direction (x-axis direction) of the battery cell. Specifically, the first busbar assembly 300a located at the other end of the first sub-module 100a and the second busbar assembly 300b located at one end of the second sub-module 100b can be electrically connected to form the battery module 100 according to the present embodiment. In this case, referring to FIG. 16, the first busbar assembly 300a and the second busbar assembly 300b may be electrically connected to each other due to a connection cable 380. The connection cable 380 will be described in more detail later with reference to FIG. 18.

Referring to FIGS. 15 and 16, side plates 230 may be provided on both side surfaces of one battery module 100 formed by electrically connecting the first sub-module 100a and the second sub-module 100b.

The side plate 230 may be a plate extending along the longitudinal direction (x-axis direction) of the battery module 100. Specifically, the length of the side plate 230 may correspond to the length of the battery module 100. Further, the length of the side plate 230 may correspond to the sum of the lengths of the first sub-module 100a and the second sub-module 100b. Herein, "corresponding in length" may mean that the length is equal to the length of the battery module or is within an error range of about 10% from the same value.

The side plate 230 may be located facing a first outermost battery cell 110a of the first sub-module 100a and a second outermost battery cell 110b of the second sub-module 100b, which constitute the battery module 100. Further, the side plate 230 may be located facing a first compression pad 250a of the first sub-module 100a and a second compression pad 250b of the second sub-module 100b, which constitute the battery module 100.

The side plate 230 may be made of metal having rigidity. When the first sub-module 100a and the second sub-module 100b are inserted and mounted into the module frame 200, the side plate 230 can perform the function to protect the outermost battery cells 110a and 110b or the compression pads 250a and 250b of the first sub-module 100a and the second sub-module 100b.

Further, since the battery cell stacks 120a and 120b constituting the battery module 100 of the present embodiment are long relative to a length of a typical battery cell stack, it may not be easy to insert and assemble them into the module frame 200. In this case, referring to FIGS. 15 to 17, the side plate 230 guides the battery cell stack 120 constituting the battery module 100 of the present embodiment to be inserted into the module frame 200, which make it possible to easily assemble the battery module without damaging the battery cell 110 and the compression pads 250a and 250b.

FIG. 18 is a diagram showing the inside of an area A1 in FIG. 11. FIG. 19 is a diagram showing an area A2 of FIG. 11.

Referring to FIG. 18, a connection cable 380 is provided between the first sub-module 100a and the second sub-module 100b, so that the first sub-module 100a and the second sub-module 100b can be electrically connected. The connection cable 380 may be a flexible flat cable (FFC).

The connection cable 380 can connect the first flexible printed circuit board 350a located in the first sub-module 100a and the second flexible printed circuit board 350b located in the second sub-module 100b. At this time, the first busbar frame 310a where the first flexible printed circuit board 350a is located, and the second busbar frame 310b where the second flexible printed circuit board 350b is located, are each composed of an insulating material, thereby capable of insulating other components excluding the busbar 330, the connection cable 380, and the flexible printed circuit board 350 that electrically connect the first sub-module 100a and the second sub-module 100b.

As mentioned above, since the first flexible printed circuit board 350a and the second flexible printed circuit board 350b are connected via the connection cable 380, the first battery cell stack 120a and the second battery cell stack 120b can be electrically connected only by cables without any additional configuration, thereby reducing the overall volume of the battery module 100. Therefore, the energy density of the battery can be increased, and the space utilization rate of the battery can be improved. Further, installation space for the battery module 100 can be ensured, and when the battery module 100 is installed in a device such as an automobile, traveling performance and fuel efficiency can be improved.

Referring to FIG. 19, the first sub-module 100a and the second sub-module 100b may be electrically connected by connecting electrode leads 130 to each other. Specifically, the first electrode lead 130a of the first sub-module 100a and the second electrode lead 130b of the second sub-module 100b can be electrically connected by overlapping each other. In this case, the first electrode lead 130a and the second electrode lead 130b may be electrically connected while being in contact with adjacent busbars 330 adjacent to each other. That is, the first electrode lead 130a, the second electrode lead 130b, and the busbar 330 may be welded and electrically connected to each other.

Herein, the first electrode lead 130a and the second electrode lead 130b, which are electrically connected to each other, may be electrode leads protruding from the outermost battery cells of the first sub-module 100a and the second sub-module 100b, respectively. Referring to FIGS. 11 and 19, it is illustrated that the first electrode lead 130a and the second electrode lead 130b are connected with each other on the other side (-x-axis direction) and one side (x-axis direction) of the battery module 100, but are not limited thereto.

Specifically, in this figure, a first electrode lead 130a protruding from the outermost battery cell of the first sub-module 100a to the other side (-x-axis direction), and a second electrode lead 130b protruding from the outermost battery cell of the second sub-module 100b to one side (x-axis direction) may be electrically connected to each other while corresponding to each other. In this case, the first electrode lead 130a and the second electrode lead 130b may have different polarities.

Electrode leads that are not electrically connected between the first sub-module 100a and the second sub-module 100b may be connected to other electrical components or battery packs. That is, a first electrode lead 130a protruding to one side (x-axis direction) of the first sub-module 100a, and a second electrode lead 130b protruding to the other side (-x-axis direction) of the second sub-module 100b may be electrically connected to other electrical components or battery packs.

As mentioned above, when the first sub-module 100a and the second sub-module 100b are electrically connected, the electrical connection relationship of the electrode leads and the movement path of current will be described in detail below.

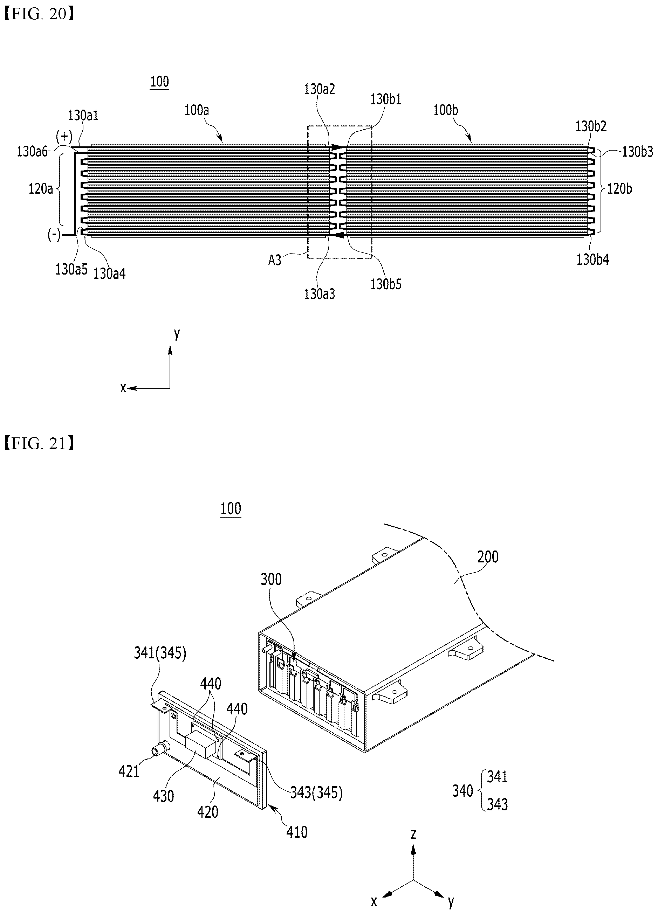

FIG. 20 is a diagram showing the movement path of current in the battery module.

Referring to FIG. 20, in the first sub-module 100a and the second sub-module 100b that are electrically connected, the end extending in the x-axis direction may be defined as one end, the end extending in the -x-axis direction may be defined as the other end, and the area where the first sub-module 100a and the second sub-module 100b are electrically connected may be defined as a connection area A3. Below, the connection structure of the electrode leads and the flow of electric current at one end, the other end, and the connection area A3 will be described in detail.

A first outermost electrode lead 130a1 located at one end of the first sub-module 100a and a first electrode lead 130a6 located adjacent thereto are electrically connected to the outside, so that electric current may be supplied to the first sub-module 100a and the second sub-module 100b. In this case, the electric current is supplied to the first sub-module 100a from the outside, but since the first electrode lead 130a and the second electrode lead 130b are electrically connected in the connection area A3, electric current may also flow through the second sub-module 100b.

In the connection area A3, first electrode leads 130a2 and 130a3 located at the outermost part of the first battery cell stack 120a of the first sub-module 100a with reference to the stacking direction (y-axis direction), and second electrode leads 130b1 and 130b5 located at the outermost part of the second battery cell stack 120b of the second sub-module 100b in the stacking direction (y-axis direction) are electrically connected to each other. Specifically, the outermost first electrode leads 130a2 and 130a3 located at the other end of the first sub-module 100a are electrically connected to the outermost second electrode leads 130b1 and 130b5 located at one end of the second sub-module 100b.

In this case, in the connection area A3, the electrode leads other than the outermost first electrode leads 130a2 and 130a3 and the outermost second electrode leads 130b1 and 130b5 may be electrically connected to adjacent electrode leads, respectively. More specifically, at the other end of the first sub-module 100a, the first electrode leads excluding the outermost first electrode leads 130a2 and 130a3 may be electrically connected while forming a pair with adjacent first electrode leads. Even at one end of the second sub-module 100b, similarly, the second electrode leads excluding the outermost second electrode leads 130b1 and 130b5 may be electrically connected while forming a pair with adjacent second electrode leads.

At one end of the first sub-module 100a excluding the connection area A3, a first outermost electrode lead 130a1 electrically connected to an external power source, and the remaining first electrode leads excluding the adjacent first electrode lead 130a6 may be electrically connected to each other. In one example, adjacent first electrode leads 130a4 and 130a5 may be electrically connected in pairs.

At the other end of the second sub-module 100b excluding the connection area A3, adjacent second electrode leads may be electrically connected to each other. In one example, adjacent second electrode leads may be electrically connected in pairs. Herein, the second outermost electrode leads 130b2 and 130b4 of the second sub-module 100b may also be electrically connected to each other while forming a pair with adjacent second electrode leads.

When the electrical connection of the electrode leads 130a and 130b is formed as described above, electric current may move along the electrical connection of such electrode leads 130a and 130b.

That is, the arrow in this figure refer to the flow of electric current. However, the flow of electric current is not limited to those described in this figure, and as long as a person skilled in the art can change the electrical connection of the electrode lead to easily change the flow of current, any flow current is available.

FIG. 21 is a perspective view showing that the first sealing assembly is mounted on one side of the module frame according to an embodiment of the present disclosure.

Referring to FIG. 21, the battery module 100 according to an embodiment of the present disclosure may include a first sealing assembly 410 mounted on one open side of the module frame 200. Specifically, in the battery module 100 according to the present embodiment, the busbar assembly 300 electrically connected to the battery cell stack may be located on one open side of the module frame 200, and the first sealing assembly 410 may be mounted while covering the busbar assembly 300.

The first sealing assembly 410 may include a first sealing cover 420 covering one open side of the module frame 200, an inlet 421 which is a hole formed in the first sealing cover 420, and a module connector 430 mounted on one area of the first sealing cover 420.

The first sealing cover 420 is a plate that covers one open side of the module frame 200, and may have a size corresponding to the size of the one open side of the module frame 200. That is, the first sealing cover 420 may be mounted on the module frame 200 while covering one open surface of the module frame 200. In one example, the first sealing cover 420 may be fitted with the module frame 200.

The inlet 421 may be configured such that a coolant flows into the battery module 100. The inlet 421 may be a hole formed in one area of the first sealing cover 410. The inlet 421 may be a hole that includes a protrusion part protruding from the first sealing cover 420 on the outer surface (x-axis direction) of the first sealing cover 420. That is, the inlet 421 may be a hole including a protrusion part protruding in the opposite direction of the area where the module frame 200 is arranged. The protrusion part may be located while passing through the inlet opening 540 formed in the first end plate 510, which will be described later.

The inlet 421 may be located closer to the lower part (-z-axis direction) than the upper part of the first sealing assembly 410. Specifically, the inlet 421 may be located at a lower part than a center part of the first sealing assembly 410 on the basis of the height (z-axis direction). Thereby, after the coolant flows inside the module frame 200, the coolant can be filled in the inside of the module frame 200 from the lower part to the upper part without any empty space, thereby improving the cooling performance of the battery cell stack and other electrical components located inside the module frame 200.

However, the inlet 421 may be located on the same line as the outlet 461, which will be described later. For example, the inlet 421 may be located closer to the upper part than to the lower part of the first sealing assembly 410. In this case, after the coolant flows into the module frame 200, the coolant can be filled from the lower part to the upper part of the module frame 200 without empty space, and can then be discharged to the outside through the outlet 461.

The module connector 430 may detect phenomena such as overvoltage, overcurrent, and overheating of the battery cell and control them. The module connector 430 is for LV (Low voltage) connection, wherein the LV connection may refer to a sensing connection for detecting and controlling the voltage of the battery cell. The voltage information and temperature information of the battery cell can be transmitted to an external BMS (Battery Management System) through the module connector 430.

The module connector 430 may be mounted on the first sealing cover 420. At this time, the module connector 430 may be mounted by being coupled to the first sealing cover 420 through the coupling member 440. At least a part of the module connector 430 may be exposed to the outside of the end plate 510, which will be described later, and the end plate 510 may be provided with a module connector opening 530 for this purpose.

The first sealing cover 410 may be provided with a terminal busbar 340. The terminal busbar 340 may include a first terminal busbar 341 and a second terminal busbar 343, and the first terminal busbar 341 and the second terminal busbar 343 may have different polarities.

The terminal busbar 340 is electrically connected to the busbar, so that it can be for electrically connecting one battery module 100 to another battery module 100. In order to electrically connect one battery module 100 to another external battery module 100, at least a part of the terminal busbar 340 may be exposed to the outside of the end plate 510, which will be described later, and the end plate 400 may be provided with a terminal busbar opening 520 for this purpose.

The terminal busbar 340 may further include a protrusion part 345 protruding from the outer surface of the first sealing cover 420. The protrusion part 345 may be exposed to the outside of the battery module 100 through the terminal busbar opening 520, which will be described later. The terminal busbar 340 may be connected to another battery module 100 or a BDU (battery disconnect unit) through a protrusion part 345 exposed through the terminal busbar opening 520, and can form a high voltage (HV) connection with them.

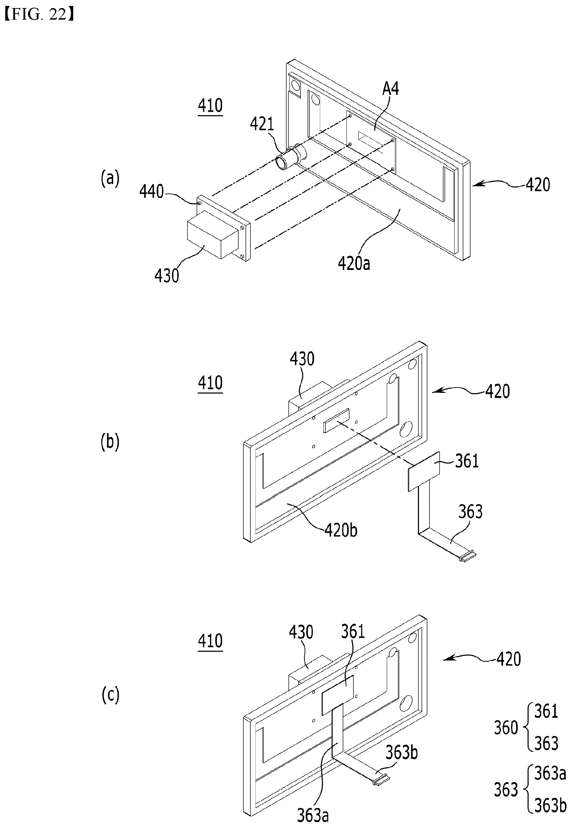

FIG. 22 is a diagram showing the process of assembling the first sealing assembly of FIG. 21. FIG. 22(a) is a diagram showing that the module connector is coupled to the first sealing cover. FIG. 22(b) is a diagram showing that the sensing unit is coupled to the first sealing cover. FIG. 22(c) is a diagram showing that both the module connector and the sensing unit are coupled to the first sealing cover.

Referring to FIG. 22, a module connector 430 is mounted on one surface of the first sealing assembly 410, and a sensing unit 360 is mounted on the other surface of the first sealing assembly 410, so that the module connector 430 and the sensing unit 360 can be electrically connected to each other.

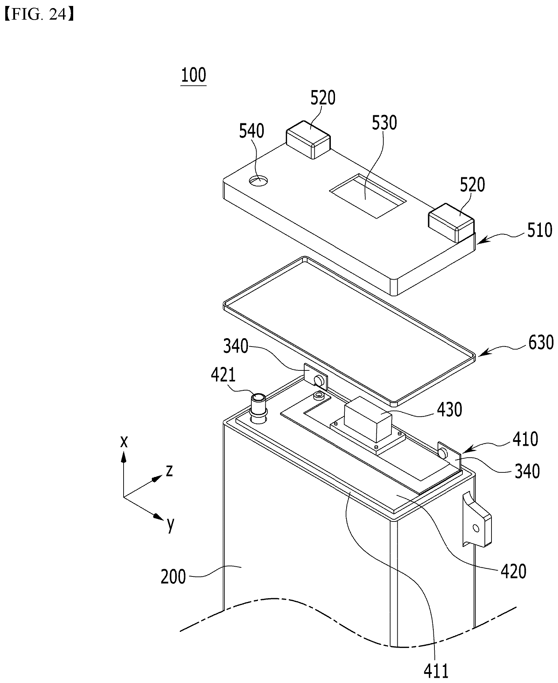

Referring to FIG. 22(a), a module connector 430 may be mounted on one surface of the first sealing cover 420. Specifically, the module connector 430 may be mounted on the outer surface 420a of the first sealing cover 420. The outer surface 420a of the first sealing cover 420 is a surface that faces the end plate 510 (see FIG. 24) described later, and may be a surface that does not face the module frame 200 (see FIG. 21).

The module connector 430 may be mounted and located in the fourth area A4, which is one area of the outer surface 420a of the first sealing cover 420. The fourth area A4 is an area corresponding to the size of the module connector 430, a hole passing through the first sealing cover 420 is provided in the center part of the fourth area A4, and a groove in which the coupling member 440 can be mounted may be provided at the vertex of the fourth area A4. In this case, a coupling member 440 may be provided at the vertex of the module connector 430, and the coupling member 440 may be located in an area corresponding to the groove of the fourth area A4. Therefore, the coupling member 440 can be coupled to a groove in the fourth area A4, and thereby the module connector 430 can be mounted in the fourth area A4.

The coupling member 440 may be any material that couples and fixes the module connector 430 to the fourth area A4, and may be, for example, a bolt, nut, or rivet.

Referring to FIG. 22(b) and FIG. 22(c), a sensing unit 360 may be mounted on the other surface of the first sealing cover 420. Specifically, the sensing unit 360 may be mounted on the inner surface 420b of the first sealing cover 420. The inner surface 420b of the first sealing cover 420 is a surface that faces the module frame 200 (see FIG. 21), and may be a surface that does not face the end plate 510 (see FIG. 24).

The sensing unit 360 may include a sensing printed circuit board 361 and a sensing cable 363 electrically connected to the sensing printed circuit board 361. The sensing printed circuit board 361 may be electrically connected to the module connector 430. The sensing printed circuit board 361 may be located in one area corresponding to the module connector 430. Specifically, the sensing printed circuit board 361 may be located in the fourth area A4. The sensing printed circuit board 361 may be located while being electrically connected to the module connector 430 through a hole in the fourth area A4.

The sensing cable 363 is a cable electrically connected to the sensing printed circuit board 361 and may include a cable connection part 363a and a cable extension part 363b.

The cable connection part 363a is connected to the sensing printed circuit board 361 and may be located while being in contact with the inner surface 420b of the first sealing cover 420. The cable connection part 363a is fixedly located while being in contact with the inner surface 420b of the first sealing cover 420, and may not move arbitrarily within the battery module 100, which may not cause a damage of components.

Specifically, the cable connection part 363a extends from the sensing printed circuit board 361 to the lower part of the first sealing cover 420, and may be bent and extended from the lower part of the first sealing cover 420. At this time, a portion extending from the cable connection part 363a while being bent from the lower part of the first sealing cover 420 can be defined as a cable extension part 363b.

The cable extension part 363b may be electrically connected to the flexible printed circuit board 350 located in the busbar assembly, and the details will be described later with reference to FIG. 22.

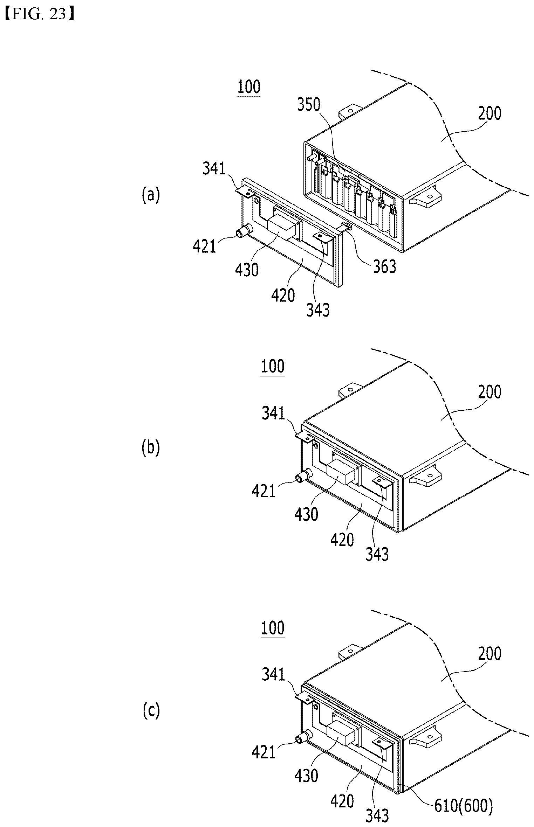

FIG. 23 is a diagram showing a process in which the first sealing assembly of FIG. 21 is mounted on one surface of the module frame. FIG. 23(a) is a diagram showing that a sensing cable is electrically connected to a flexible printed circuit board. FIG. 23(b) is a view showing that the first sealing assembly is coupled to the module frame. FIG. 23(c) is a view showing sealing the first sealing assembly and the module frame.

Referring to FIG. 22(c) and FIG. 23(a), the sensing cable 363 may be electrically connected to the flexible printed circuit board 350 located on the busbar assembly. In this case, the sensing cable 363 can transmit voltage information, temperature information, etc. of the battery cell acquired from the flexible printed circuit board 350 to the sensing printed circuit board 361. In this case, the sensing printed circuit board 361 can transmit battery cell information, etc. acquired from the flexible printed circuit board 350 to the module connector 430. That is, the sensing unit 360 can transmit battery cell data acquired from the flexible printed circuit board 350 to the module connector 430.

Therefore, the module connector 430 can transmit data acquired from the flexible printed circuit board 350 and the sensing unit 360 to a BMS (battery management system), and the BMS can control the charging and discharging of battery cells on the basis of the collected voltage data.

Referring to FIG. 23(a) and FIG. 23(b), the first sealing cover 420 may be mounted on the module frame 200 while covering one open surface of the module frame 200. In one example, the first sealing cover 420 may be fitted with the module frame 200. In this case, the edge of the first sealing cover 420 may include a protrusion part that partially protrudes toward the direction coupling to the module frame 200. At this time, the edge of the module frame 200 coupled to the first sealing cover 420 may be formed with a step so that the edge protrusion part of the first sealing cover 420 can be inserted. Thus, the first sealing cover 420 and the module frame 200 may be fitted together.

Referring to FIG. 23(c), when the first sealing cover 420 and the opened one side of the module frame 200 are coupled to each other, the first sealing member 610 may be interposed along the edges of the first sealing cover 420 and the module frame 200. When the first sealing cover 420 and the module frame 200 are coupled, a fine gap may occur between them due to assembly tolerances, and this is sealed with the first sealing member 610 to improve the sealing force of the battery module 100. Therefore, it is possible to prevent leakage of the coolant located inside the battery module 100, prevent the leakage of gas generated inside the battery module 100, and control the direction of gas discharge, thereby improving the safety of the battery module 100. FIG. 23(c) illustrates as being exposed to the outside in order to show the first sealing member 610, but the first sealing member 610 may be interposed between the module frame 200 and the first sealing cover 420.

In this case, the first sealing member 610 may be, for example, an adhesive tape.

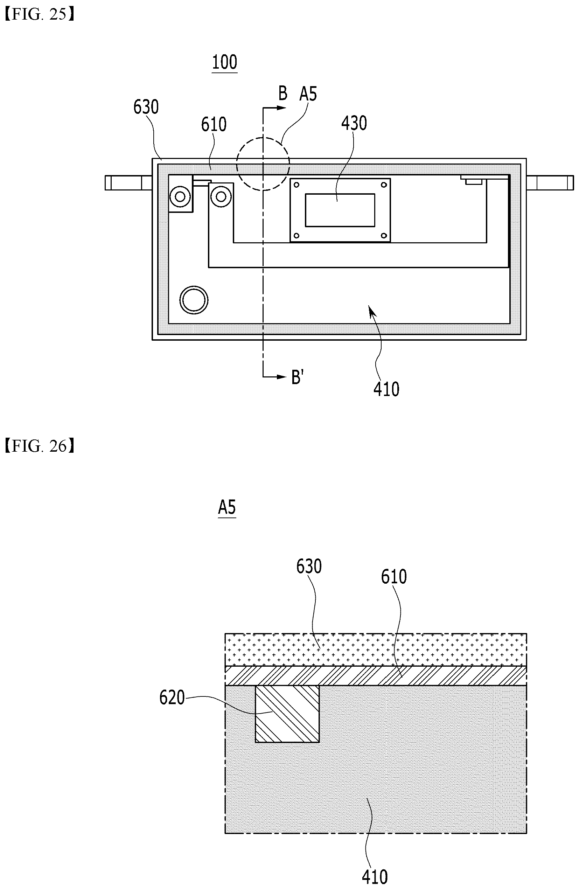

Although not shown in this figure, after the first sealing assembly 410 is coupled to the module frame 200 and the edges are sealed with the first sealing member 610, other gaps existing in the first sealing assembly 410 may be sealed with a second sealing member 620 (see FIGS. 25 and 26). That is, the second sealing member 620 may be located while filling a gap located in an area other than the area sealed by the first sealing member 610, among the area between the module frame 200 and the first sealing assembly 410. Thereby, the second sealing member 620 is used to seal the portions of the first sealing assembly 410 other than the edges that cannot be sealed by the first sealing member 610, thereby further improving the sealing force of the battery module 100. The second sealing member 620 will be described in more detail with reference to FIGS. 25 and 26.

FIG. 24 is an exploded perspective view showing that the first end plate is mounted on the first sealing assembly according to an embodiment of the present disclosure.

Referring to FIG. 24, in the battery module 100 according to an embodiment of the present disclosure, the first end plate 510 may be located while covering the first sealing assembly 410.

The first end plate 510 may include a terminal busbar opening 520, a module connector opening 530, and an inlet opening 540.

The terminal busbar opening 520 is an opening provided in the first end plate 510. Specifically, the terminal busbar opening 520 may be an opening formed in an area corresponding to the position of the terminal busbar 340 provided in the first sealing assembly 410.

The terminal busbar opening 520 is a protrusion part that protrudes from the first end plate 510 toward the outside of the battery module 100, and may have a configuration in which only the upper surface (z-axis direction) of the protrusion part is open. That is, although not illustrated in this figure, the terminal busbar opening 520 may be exposed in the z-axis direction, so that the protrusion part may be exposed to the outside. In this case, a part of the terminal busbar 340 may be exposed to the outside on the upper surface of the protrusion part.

The size of the terminal busbar opening 520 may be mainly determined by the circumferential size of the terminal busbar 340. However, for ease of assembly or for manufacturing process reasons, the size of the terminal busbar opening 520 may be larger than the size of the exposed portion of the terminal busbar 340, wherein a gap may occur between the terminal busbar opening 520 and the terminal busbar 340 that are exposed to the outside.

The module connector opening 530 and the inlet opening 540 are openings provided in the first end plate 510, and are holes passing through the first end plate 510. Specifically, the module connector opening 530 may be an opening formed in an area corresponding to the position of the module connector 430 provided in the first sealing assembly 410, and the inlet opening 540 may be an opening formed in an area corresponding to the position of the inlet 421 provided in the first sealing assembly 410. In this case, the module connector 430 is located while passing through the module connector opening 530, and the inlet 421 is located while passing through the inlet opening 540, whereby at least a part of the module connector 430 and the inlet 421 may be exposed to the outside.

The sizes of the module connector opening 530 and the inlet opening 540 may be mainly determined by the circumferential sizes of the module connector 430 and the inlet 421. However, for ease of assembly or for manufacturing process reasons, the size of the module connector opening 530 and the inlet opening 540 may be larger than the size of the exposed portion of the module connector 430 and the inlet 421, wherein a gap may occur between the module connector 430 and the inlet 421 that are exposed to the outside of the module connector opening 530 and the inlet opening 540.

The terminal busbar 340 and module connector 430 are respectively exposed to the outside through the terminal busbar opening 520 and the module connector opening 530, thereby facilitating HV connection and LV connection with external electrical components. Therefore, the assembly process efficiency can be improved.

The inlet 421 is exposed to the outside of the battery module 100 through the inlet opening 540, and thus, when the coolant is injected into the module frame 200 through the inlet 421, the coolant can be prevented from leaking between the first sealing assembly 410 and the first end plate 510. Therefore, the coolant may not come into contact with the terminal busbar 340 or the module connector 430 that makes electrical connections to the outside. That is, a short circuit between the components may not occur, and thus, the safety of the battery module 100 may be improved.

A third sealing member 630 may be interposed between the first end plate 510 and the first sealing assembly 410.

The third sealing member 630 may be formed in the shape corresponding to the edge of the first sealing assembly 410 or the edge of the first end plate 510. The third sealing member 630 may be a resin that is applied and then cured to correspond to the edge of the first sealing assembly 410 or the edge of the first end plate 510. Specifically, the third sealing member 630 may be applied to the first groove 411, which is a groove formed along the edge of the first sealing assembly 410, and may be cured after the first sealing assembly 410 and the first end plate 510 are coupled. In one example, the third sealing member 630 may be made of an epoxy resin.

That is, the third sealing member 630 is interposed between the first sealing assembly 410 and the first end plate 510, so that the first sealing assembly 410 and the first end plate 510 can be coupled without a gap formed due to assembly tolerances.

Therefore, the sealing force of the battery module 100 is improved, leakage of the coolant located within the battery module 100 is prevented, and thus, the cooling performance of the battery module 100 can be enhanced. Further, within the battery module 100, the venting direction can be adjusted while preventing venting gas generated at a prescribed temperature and pressure or higher from being discharged to the outside through the gap, thereby improving the safety of the battery module 100.

However, the type and formation method of the third sealing member 630 are not limited to those described above, and may have a shape such as a gasket formed of an elastic member, and any shape is available as long as it can serve to seal the first sealing assembly 410 and the first end plate 510.

FIG. 25 is a view of the first end plate mounted on the first sealing assembly viewed in the -x-axis direction of FIG. 24. FIG. 26 is a diagram showing an area A5 cut along the line B-B' in FIG. 25.

Referring to FIGS. 25 and 26, it can be seen that a first sealing member 610 and a third sealing member 630 are located along the edge of the first sealing assembly 410, and a second sealing member 620 is located in one area of the first sealing assembly 410..

In regard to the second sealing member 620, referring to FIG. 26, the second sealing member 620 may be located in one area excluding the edge area of the first sealing assembly 410. That is, the second sealing member 620 can seal the remaining area of the first sealing assembly 410 that is not covered by the first sealing member 610 and the third sealing member 630. Specifically, the second sealing member 620 may seal one area involving a gap in the first sealing assembly 410. However, the area where the second sealing member 620 is located is not limited to the area shown in this figure. For example, the second sealing member 620 may seal a gap part of the first sealing assembly 410 where the module connector 430 is coupled.

Consequently, in addition to the edge portion of the first sealing assembly 410, the portion where a gap is located is further sealed by the second sealing member 620, so that the sealing force of the battery module 100 is improved, leakage of the coolant located inside the battery module 100 is prevented, and the cooling performance of the battery module 100 can be improved. Further, since gas generated inside the battery module 100 at a prescribed temperature and pressure or higher is not discharged through the gap between the first sealing assembly 410 and the first end plate 510, the safety of the battery module 100 can be enhanced.

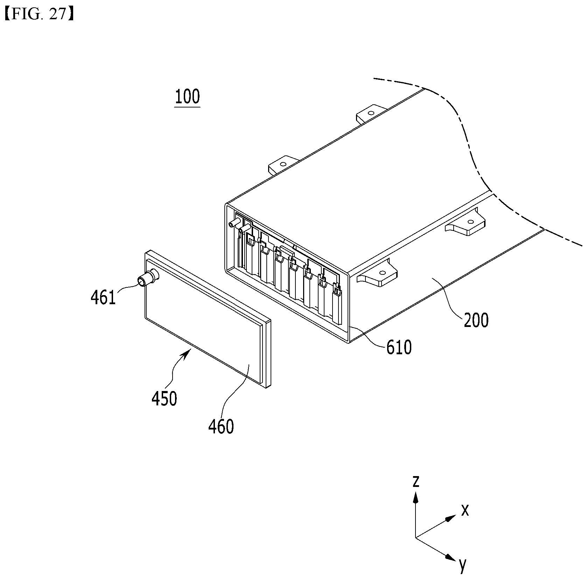

FIG. 27 is a diagram showing that the second sealing assembly is mounted on the other surface of the module frame according to an embodiment of the present disclosure.

Referring to FIG. 27, the battery module 100 according to an embodiment of the present disclosure may include a second sealing assembly 450 mounted on the other open surface of the module frame 200. Specifically, in the battery module 100 according to the present embodiment, the busbar assembly electrically connected to the battery cell stack may be located on the other open side of the module frame 200, and the second sealing assembly 450 may be mounted while covering the busbar assembly.

The second sealing assembly 450 may include a second sealing cover 460 covering the other open surface of the module frame 200, and an outlet 461 that is a hole formed in the second sealing cover 420.

The second sealing cover 460 is a plate that covers the other open surface of the module frame 200, and may have a size corresponding to the size of the other open surface of the module frame 200. Herein, "corresponding in size" may mean that the size is equal to the size of the other open side of the module frame 200, or that the size is within an error range of about 10% on the basis of the size of the other open side of the module frame 200. That is, the second sealing cover 460 may be mounted on the module frame 200 while covering the other open side of the module frame 200. In one example, the second sealing cover 460 may be fitted with the module frame 200.

The outlet 461 may discharge the coolant that has flowed into the battery module 100 through the inlet, to the outside of the battery module 100.

The outlet 461 may be a hole formed in one area of the second sealing cover 460. The outlet 461 may be a hole including a protrusion part protruding along the outer surface (-x-axis direction) of the second sealing cover 460. That is, the outlet 461 may be a hole including a protrusion part protruding in the opposite direction of the module frame 200. The protrusion part may be located while passing through the outlet opening 560 formed in the second end plate 550, which will be described later.

The outlet 461 may be located close to the upper part (z-axis direction) of the second sealing assembly 450. Specifically, the outlet 461 may be located above the center part on the basis of the height of second seal assembly 450. However, the position of the outlet 461 is not limited thereto, but may be provided at a higher position than the inlet 421 described in FIG. 20.

Specifically, the outlet 461 may be provided at a higher position than that of the inlet 421. Alternatively, the outlet 461 may be provided on the same line as the inlet 421. In this case, both the inlet 421 and the outlet 461 may be located at an upper side (z-axis direction) than a center part of the first sealing cover 420 and the second sealing cover 460. This is to ensure that after the coolant flows into the module frame 200, the coolant is filled from the lower part to the upper part of the module frame 200 without empty space, and is then discharged to the outside through the outlet 461. In case where the inlet 421 and the outlet 461 are located at a lower side (-z-axis direction) than a center part of the first sealing cover 420 and the second sealing cover 460, even if the coolant flows into the module frame 200, they do not come into contact with the battery cell stack and other electrical components, which may reduce the cooling efficiency.

Thus, if the inlet 421 and the outlet 461 are located on the same line, it would be preferable that they are located on an upper part of the first sealing cover 420 and the second sealing cover 460, If the inlet 421 and the outlet 461 are not located on the same line, it would be preferable that the inlet 421 is provided at a lower position than the outlet 461.

When the second sealing assembly 450 and the other open side of the module frame 200 are coupled to each other, the first sealing member 610 may be interposed along the edge of the second sealing cover 460 and the module frame 200. When the second sealing cover 460 and the module frame 200 are coupled, a fine gap may occur between them due to assembly tolerances, and this gap is sealed with a sealing member 600, thereby capable of improving the sealing force of the battery module 100. Therefore, leakage of coolant located inside the battery module 100 can be prevented, leakage of venting gas occurring inside the battery module 100 can also be prevented, and thus, the discharge direction of the gas can be controlled, thereby improving the safety of the battery module 100.

In this case, the first sealing member 610 may be, for example, an adhesive tape.

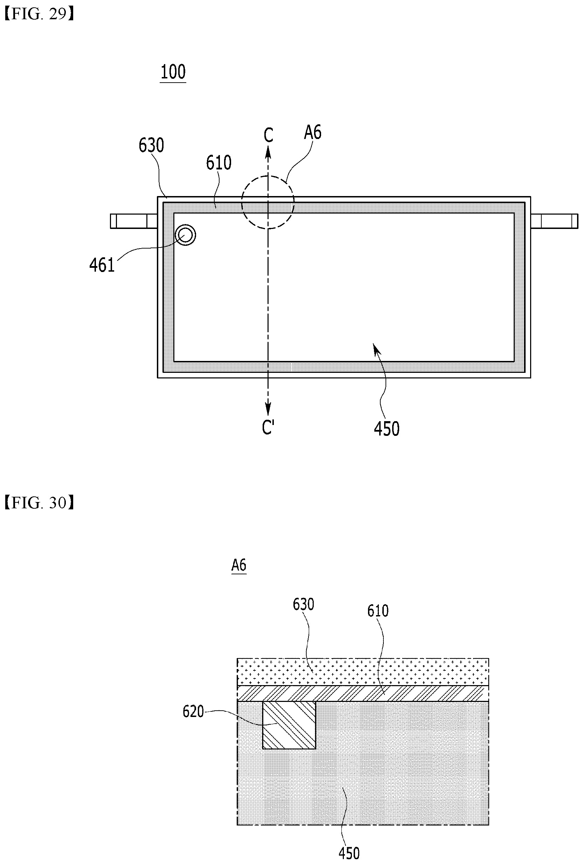

Although not shown in this figure, after the second sealing assembly 450 is coupled to the module frame 200 and the edges are sealed with the first sealing member 610, the gap existing on the second sealing assembly 450 may be sealed with a second sealing member 620 (see FIG. 29). This is to use the second sealing member 620 to seal the portions of the second seal assembly 450 other than the edges that cannot be sealed with the first sealing member 610, and to further improve the sealing force of the battery module 100. The second sealing member 620 will be explained in more detail with reference to FIG. 29.

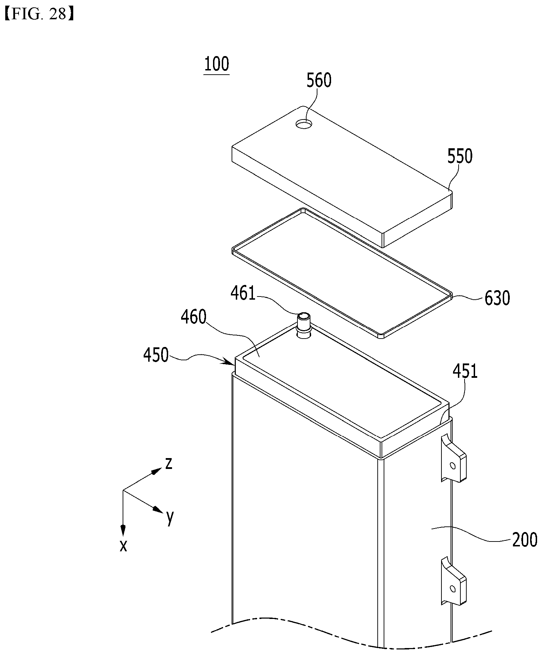

FIG. 28 is an exploded perspective view showing that the second end plate is mounted on the second seal assembly according to an embodiment of the present disclosure.

Referring to FIG. 28, in the battery module 100 according to an embodiment of the present disclosure, the second end plate 550 may be located while covering the second sealing assembly 450.

The second end plate 550 may include an outlet opening 560.

The outlet opening 560 is an opening provided in the second end plate 550, and is a hole that passes through the second end plate 550. Specifically, the outlet opening 560 may be an opening formed in an area corresponding to the position of the outlet 461 provided in the second sealing assembly 450. In this case, the outlet 461 is located while passing through the outlet opening 560, so that at least a part of the outlet 461 may be exposed to the outside.

The size of the outlet opening 560 may be mainly determined by the circumferential size of the outlet 461. However, for ease of assembly or for manufacturing process reasons, the size of the outlet opening 560 may be larger than the size of the exposed portion of the outlet 461, wherein a gap may occur between the outlets 461 exposed to the outside of the outlet opening 560.

The outlet 461 is exposed to the outside of the battery module 100 through the outlet opening 560, and thus, when the coolant located inside the module frame 200 is discharged through the outlet 461, it is possible to prevent a coolant from leaking between the second sealing assembly 450 and the second end plate 550. Therefore, since the coolant does not come into contact with other electrical components, a short circuit may not occur, and thus, the safety of the battery module 100 can be improved.

A third sealing member 630 may be interposed between the second sealing assembly 450 and the second end plate 550.

The third sealing member 630 may be formed in the shape corresponding to the edge of the second sealing assembly 450 or the edge of the second end plate 550. The third sealing member 630 may be a resin that is applied and then cured to correspond to the edge of the second sealing assembly 450 or the edge of the second end plate 550. Specifically, the third sealing member 630 may be applied to the second groove 451, which is a groove formed along the edge of the second sealing assembly 450, and after the second sealing assembly 450 and the second end plate 550 are coupled, they may be cured. In one example, the third sealing member 630 may be made of an epoxy resin.

That is, the third sealing member 630 is interposed between the second sealing assembly 450 and the second end plate 550, so that the second sealing assembly 450 and the second end plate 550 can be coupled without gaps formed due to assembly tolerances.

Therefore, the sealing force of the battery module 100 is improved, and leakage of the coolant located within the battery module 100 is prevented, thereby improving the cooling performance of the battery. Further, within the battery module 100, the venting direction can be adjusted while preventing the venting gas generated at a prescribed temperature and pressure or higher from being discharged to the outside through the gap, thereby improving the safety of the battery module 100.

The type and formation method of the third sealing member 630 are not limited to those described above, and may have a shape such as a gasket formed of an elastic member, and any shape is available as long as it can serve to seal the second sealing assembly 450 and the second end plate 550.

FIG. 29 is a view of the second end plate mounted on the second sealing assembly viewed in the -x-axis direction of FIG. 28. FIG. 30 is a diagram showing an area A6 cut along C-C' of FIG. 29.

Referring to FIGS. 29 and 30, it can be seen that a first sealing member 610 and a third sealing member 630 are located along the edge of the second sealing assembly 450, and a second sealing member 620 is located in one area of the second sealing assembly 450.

In regard to the second sealing member 620, referring to FIG. 30, the second sealing member 620 may be located in one area excluding the edge area of the second sealing assembly 450. That is, the second sealing member 620 can seal the remaining area of the second sealing assembly 450 that is not covered by the first sealing member 610 and the third sealing member 630. Specifically, the second sealing member 620 may seal one area involving a gap in the first sealing assembly 410. However, the area where the second sealing member 620 is located is not limited to the area shown in this figure.

Consequently, in addition to the edge portion of the second sealing assembly 450, the portion where a gap is located is further sealed by the second sealing member 620, so that the sealing force of the battery module 100 is improved, leakage of the coolant located inside the battery module 100 is prevented, and thus, the cooling performance of the battery module 100 can be improved. Further, since gas generated inside the battery module 100 at a prescribed temperature and pressure or higher is not discharged through the gap between the second sealing assembly 450 and the second end plate 550, the safety of the battery module 100 can be enhanced.

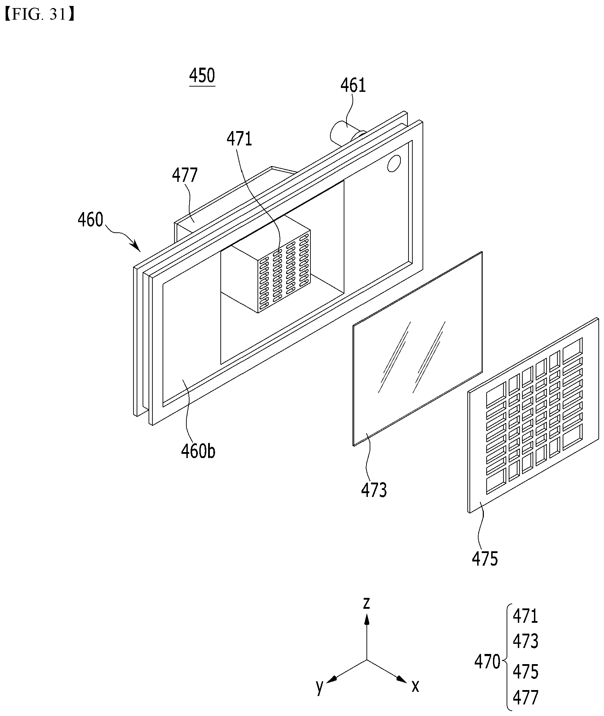

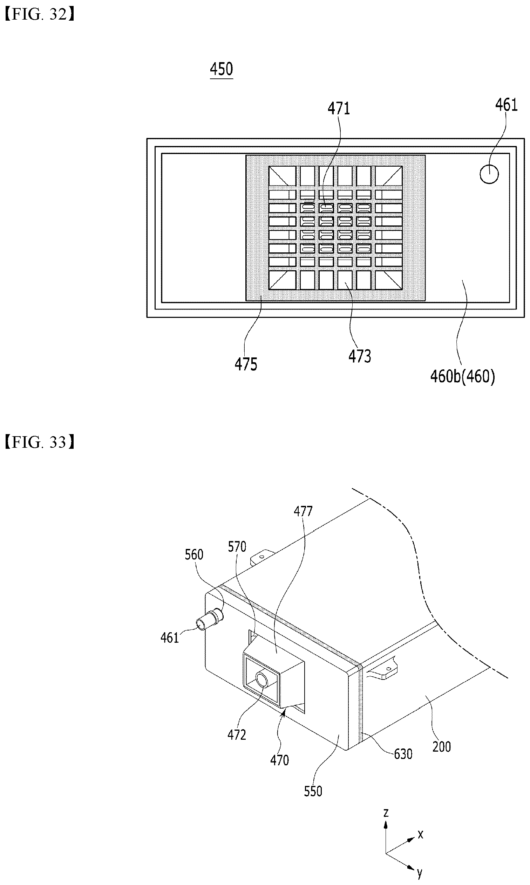

FIG. 31 is an exploded perspective view of a second sealing assembly according to another embodiment of the present disclosure. FIG. 32 is a diagram when FIG. 31 is viewed in the -y-axis direction.

Referring to FIGS. 31 and 32, the second sealing assembly 450 according to another embodiment of the present disclosure may further include an outlet 461 and a module venting part 470. Since the outlet 461 is the same as described above, the module venting portion 470 will be mainly described below.

The module venting part 470 can discharge gas generated inside the battery module 100 to the outside at a certain temperature and pressure or higher. Specifically, the module venting part 470 can prevent the coolant inside the battery module 100 from leaking while discharging the gas inside the battery module 100 to the outside.

The module venting part 470 may be provided in one area of the second sealing cover 460. The module venting part 470 may include a venting hole 471, a membrane 473, a fixing cover 475, and a venting protrusion part 477.

The venting hole 471 may be a passage through which gas generated inside the battery module 100 moves to the outside. The venting hole 471 may be at least one hole provided in one area of the second sealing cover 460. The venting hole 471 may be structurally connected to the module connection part 472 described later in FIG. 33, and the details will be described in detail in FIG. 33.

The membrane 473 can discharge gas located inside the battery module 100 to the outside through the venting hole 471, but may be a membrane that prevents the coolant from leaking to the outside.

The membrane 473 may be located between the inner surface 460b of the second sealing cover 460 and the fixing cover 475. The membrane 473 may be located while being in contact with the inner surface 460b of the second sealing cover 460. In this case, one surface of the membrane 473 may be fixedly located while being in contact with the inner surface 460b of the second sealing cover 460, and the other surface of the membrane 473 may be fixedly located while being in contact with one surface of the fixing cover 475.

The fixing cover 475 may primarily allow gas and coolant located inside the battery module 100 to pass therethrough. The fixing cover 475 may be located closest to the battery cell stack.

The fixing cover 475 may be located while being in contact with the membrane. Specifically, one surface of the fixing cover 475 may be adhesively fixed to the other side of the membrane 473. In this case, the size of the fixing cover 475 may correspond to the size of the membrane 473 or may be larger than the size of the membrane 473.

The fixing cover 475 may have a shape in which a hole is provided in a flat plate. However, the hole may not be located in the edge area of the fixing cover 475.

If gas is generated inside the battery module, the gas may pass through the membrane 473 via the hole in the fixing cover 475 and be discharged to the outside. Specifically, the gas sequentially passes through the hole of the fixing cover 475, the membrane 473, and the venting hole 471, and may be discharged outside the battery module. However, in this case, if the gas directly contacts the membrane 473, the membrane 473 may be torn or otherwise damaged by the pressure. Therefore, in order to prevent this, the hole in the fixing cover 475 may be formed smaller than in this figure. That is, gas can pass through the membrane 473 through the holes in the fixed cover 475 in a dispersed state as much as possible, and damage to the membrane 473 can be prevented.

The edge area of the fixing cover 475 may be in contact with the membrane 473 and/or the inner surface 460b of the second sealing cover 460. In this case, although not illustrated in this figure, an adhesive member may be interposed along the edge area of the fixing cover 475, and the fixing cover 475 may be fixedly located on the second sealing assembly 450 by the adhesive member. The hole provided in the fixing cover 475 can move gas and coolant located inside the battery module 100 to the membrane 473. At least one hole can be formed.

The venting protrusion part 477 may be one area where an area corresponding to the module venting part 470 protrudes toward the outside (x-axis direction) of the battery module 100. The venting protrusion part 477 may be an area that protrusively extends outward from an area where the venting hole 471 is provided. A portion of the venting protrusion part 477 may pass through the second end plate 550, and be exposed to the outside, so that the venting gas can be completely discharged to the outside of the battery module 100. The details will be explained in more detail based on FIG. 33.

FIG. 33 is a view showing that the second sealing assembly of FIG. 31 is coupled with the second end plate.

Referring to FIG. 33, when the second end plate 550 is mounted while covering the second sealing assembly 450, it may pass through the second end plate 550 so that the outlet 461 and at least a part of the module venting part 470 may be exposed to the outside.

Specifically, the outlet 461 may be partially exposed to the outside through the outlet opening 560 provided in the second end plate 550, and the module venting part 470 may pass through the venting opening 570 provided in the second end plate 550 and be partially exposed to the outside.

Since the outlet 461 and the outlet opening 560 are the same as those described above in FIG. 28, the details will be omitted. Below, the module venting part 470 and venting opening 570 will be described in detail.

The module venting part 470 includes a venting protrusion part 477 that protrudes in a direction opposite to the module frame 200, and the venting protrusion part 477 may be provided with a module connection part 472.

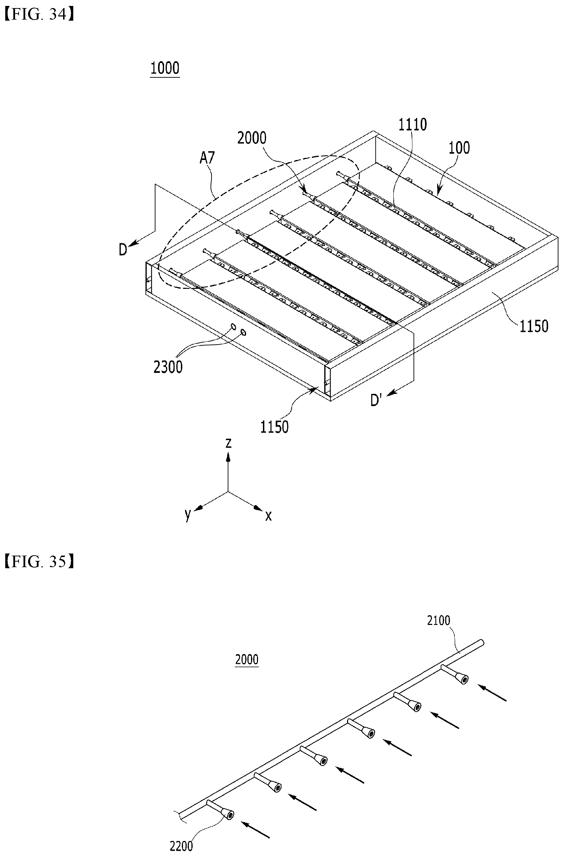

The module connection part 472 is a hole that communicates with the above-mentioned venting hole 471, and like the venting protrusion part 477, can pass through the second end plate 550 and be partially exposed to the outside. The module connection part 472 is connected to the pack venting part 2000 (FIG. 35) of the battery pack, which will be described later, so that the venting gas moving through the venting hole 471 can be discharged to the outside of the battery module. That is, at least a part of the module connection part 472 passes through the second end plate 550 and is exposed to the outside, thereby facilitating assembly with the pack venting part 2000. Therefore, the efficiency of the battery assembly process can be improved. Further, the venting gas discharged through the module connection part 472 may not remain in the space between the second end plate 550 and the second sealing assembly 450. That is, since venting gas may not remain inside the battery module 100, the safety of the battery module 100 can be improved.

The venting opening 570 is an opening provided in the second end plate 550 and is a hole passing through the second end plate 550. Specifically, the venting opening 570 may be an opening formed in an area corresponding to the position of the venting protrusion part 477 provided in the second sealing assembly 450. In this case, the venting protrusion part 477 is located while passing through the venting opening 570 together with the module connection part 472, so that at least a part of the venting protrusion part 477 and the module connection part 472 may be exposed to the outside.

The size of the venting opening 570 may be mainly determined by the circumferential size of the venting protrusion part 477. However, for ease of assembly or for manufacturing process reasons, the size of the venting opening 570 may be larger than the size of the exposed portion of the venting protrusion part 477, wherein a gap may occur between the venting opening 570 and the venting protrusion part 477 exposed to the outside.

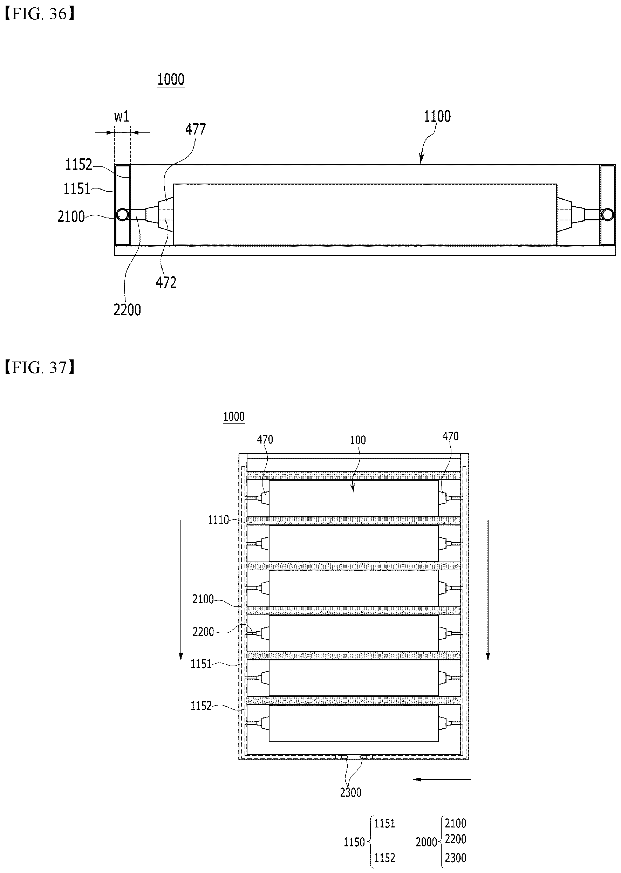

FIG. 34 is a perspective view showing the inside of a battery pack according to an embodiment of the present disclosure. FIG. 35 is a diagram showing a pack venting part according to an embodiment of the present disclosure. FIG. 36 is a cross-sectional view taken along the line D-D' of FIG. 34. FIG. 37 is a perspective view of FIG. 34 viewed in the -z-axis direction.

Referring to FIGS. 34 to 37, in the battery pack 1000 according to an embodiment of the present disclosure, a plurality of battery modules 100 are mounted in a space partitioned by an internal beam 1110 within the lower pack frame 1150, and the plurality of battery modules 100 may be connected to the pack venting part 2000. Specifically, a module venting part 470 is provided at the ends of the plurality of battery modules 100, and the module venting part 470 may be connected to the pack venting part 2000.

The pack venting part 2000 may include a direction adjustment part 2100, a pack connection part 2200, and an outlet 2300.

Referring to FIGS. 35 to 37, the direction adjustment part 2100 may be a pipe that controls the direction of the venting gas and discharges the venting gas to the outside of the battery pack 1000. Specifically, one end of the direction adjustment part 2100 is closed, and the other end may be a pipe connected to the outlet 2300 in an open state.

The direction adjustment part 2100 may be located inside the side surface pack frame 1150. The direction adjustment part 2100 extends along the side surface pack frame to the outlet 2300, so that venting gas can be discharged to the outside through the outlet 2300.

Specifically, the direction adjustment part 2100 may be located between the outer surface 1151 and the inner surface 1152 of the side surface pack frame 1150. In other words, a space may be formed between the outer surface 1151 and the inner surface 1152 of the side surface pack frame 1150, and the direction adjustment part 2100 may be located in this space. In this case, referring to FIG. 36, the diameter of the direction adjustment part 2100 may be equal to or smaller than the width w1 of the side surface pack frame 1500. However, the position of the direction adjustment part 2100 is not limited thereto. In one example, the direction adjustment part 2100 may be located outside the side surface pack frame 1150 and extend along the length of the side surface pack frame 1150.

The direction adjustment part 2100 may be connected to the pack connection part 2200. The pack connection part 2200 may be one area protruding from one surface of the direction adjustment part 2100 toward the module venting part 470. In this case, referring to FIG. 35, the direction adjustment part 2100 and the pack connection part 2200 may have a manifold shape.

The pack connection part 2200 may be configured to connect the module venting part 470 and the pack venting part 2000. That is, the pack connection part 2200 may be configured to connect the module venting part 470 and the direction adjustment part 2100. Specifically, the pack connection part 2200 is connected to the module venting part 470 so that gas generated inside the battery module 100 can be moved to the pack venting part 2000. In this case, the pack connection part 2200 may be connected to the module venting part 470 through a fitting connection, but is not limited thereto.

The module venting part 470 includes a module connection part 472 exposed to the outside of the battery module 100 and connected to the pack connection part 2200, and a protrusion part 477 that protrudes while surrounding the module connection part 472. The protrusion part 477 may be an area that surrounds the module connection part 472 and protrudes from the second sealing assembly 450 in the opposite direction of the module frame 200. The protrusion part 477 may physically protect the module connection part 472 and at the same time, guide the pack connection part 2200 to be connected to the module connection part 472.

When the direction adjustment part 2100 is located inside the side surface pack frame 1150, the pack connection part 2200 may be located while passing through the side surface pack frame 1150. That is, the pack connection part 2200 may be located while passing through the inner surface 1152 of the side surface pack frame 1150. In this case, a hole may be provided in an area of the inner surface 1152 of the side surface pack frame 1150 corresponding to the area where the pack connection part 2200 is provided. The hole may correspond to the size of the pack connection part 2200, or may be larger than the size of the pack connection part 2200 for ease of assembly. Herein, "corresponding in size" may mean that they are equal to each other or that they are within an error range of about 10% on the basis of the same value as the size of the pack connection part 2200.

The discharge port 2300 shown in FIGS. 34 and 37 is connected to the direction adjustment part 2100 and can discharge gas moving through the direction adjustment part 2100 to the outside of the battery pack 1000.

The discharge port 2300 may be provided in the side surface pack frame 1150. Referring to FIG. 37, the discharge port 2300 may be provided in one area of the side surface pack frame 1150. Specifically, the discharge port 2300 may be provided in an area of the side surface pack frame 1150 where the pack connection part 2200 is not located. This may be to set the distance between the direction adjustment part 2100 and the discharge port 2300, that is, the movement path of the venting gas, as long as possible, relatively reduce the intensity and temperature of the venting gas and discharge it to the outside.

The discharge port 2300 may be a member that opens or closes, or ruptures depending on the pressure inside the battery pack 1000.

In one example, the discharge port 2300 is connected to the inside of the battery pack 1000, but can be composed of a member that is opened to the outside only when the pressure within the battery pack 1000 exceeds a prescribed pressure, and is closed when the pressure falls below a prescribed pressure. In one example, the discharge port 2300 may be a relief valve. However, the discharge port 2300 is not limited thereto, and any member that can be opened or closed depending on the pressure of the battery pack 1000 can be included in the present embodiment.

In another example, the discharge port 2300 may rupture when the pressure inside the battery pack 1000 reaches a prescribed level or higher. More specifically, the discharge port 2300 may include a rupture surface (not shown) configured to rupture when the pressure of the inflowing gas exceeds a prescribed pressure, such as a rupture disk. However, the structure of the discharge port 2300 is not limited thereto, and any structure that communicates with the direction adjustment part 2100 and allows internal gas to be discharged to the outside can be included in the present embodiment.

As described above, high-temperature gas and/or flame generated inside the battery module 100 may be moved to the pack venting part 2000 through the module venting part 470, thereby discharging to the outside of the battery pack 1000. Specifically, the high-temperature gas and/or flame flowed in through the pack connection part 2200 moves inside the direction adjustment part 2100 and finally can be discharged to the outside through the discharge port 2300 at the side surface pack frame 1150 where the discharge port 2300 is located.

Thereby, the side surface pack frame 1150 and the direction adjustment part 2100 provided inside the side surface pack frame 1150 can form a venting path, and high-temperature gas and/or flame moving along the venting path may be cooled in contact with the inner surface of the direction adjustment part 2100, and gas and/or flame cooled by the discharge port 2300 can be safely discharged to the outside. Therefore, the safety of the battery pack 1000 can be improved.

The above-mentioned battery module and battery pack including the same can be applied to various devices. Such devices can be applied to vehicle means such as an electric bike, an electric vehicle, and a hybrid electric vehicle, but the present disclosure is not limited thereto, and also can be applied to various devices capable of using the battery module and the battery pack including the same, which falls within the scope of the present disclosure.

The invention has been described in detail above with reference to preferred embodiments thereof. However, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

100: battery module
100a: first sub-module
100b: second sub-module
110: battery cell
120: battery cell stack
200: module frame
300: busbar assembly
400: sealing assembly
500: end plate
1000: battery pack
2000: pack venting part

## Claims

1. A battery module comprising:
a first sub-module and a second sub-module which each include a battery cell stack in which a plurality of battery cells are stacked, and a busbar assembly including a busbar that electrically connects the battery cells and a busbar frame that covers the battery cell stack on at least one side;
a module frame that houses the first sub-module and the second sub-module;
a sealing assembly that covers opened both ends of the module frame; and
an end plate that covers the sealing assembly,
wherein one end of the first sub-module and the other end of the second sub-module are electrically connected to each other.

2. The battery module according to claim 1, wherein:
a cooling fin is located between two battery cells adjacent to each other within the battery cell stack, and
the cooling fin includes a plate that is adhesively fixed to one side surface of the battery cell.

3. The battery module according to claim 2, wherein:
the cooling fin further comprises a protrusion part protruding from one end of the plate, and
the protrusion part is extended protrusively in parallel to the stacking direction of the battery cell stack.

4. The battery module according to claim 3, wherein:
the protrusion part is located while being in contact with an upper surface or a lower surface of the module frame, and
the other end of the plate is located while being in contact with a lower part or an upper part of the module frame.

5. The battery module according to claim 2, wherein:
the upper part and the lower part of the battery cell are located while having a prescribed height from the upper surface and the lower surface of the module frame and being in contact with the plate.

6. The battery module according to claim 5, wherein:
a space is provided between the upper surface of the module frame and the upper part of the battery cell, and between the lower surface of the module frame and the lower part of the battery cell, and
a coolant moves into the space.

7. The battery module according to claim 1, wherein:
a first electrode lead located at the other end of the first sub-module and a second electrode lead located at one end of the second sub-module are electrically connected to each other.

8. The battery module according to claim 7, wherein:
the first electrode lead includes a first outermost electrode lead derived from an outermost battery cell of the battery cell stack constituting the first sub-module, and
the second electrode lead includes a second outermost electrode lead derived from an outermost battery cell of the battery cell stack constituting the second sub-module.

9. The battery module according to claim 8, wherein:
the first electrode leads are formed in a plurality of number, and the first electrode leads excluding the first outermost electrode lead are electrically connected while forming a pair with adjacent first electrode leads, and
the second electrode leads are formed in a plurality of numbers, and the second electrode leads excluding the second outermost electrode lead are electrically connected while forming a pair with adjacent second electrode leads.

10. The battery module according to claim 1, wherein:
the sealing assembly includes a first sealing assembly covering one open end of the module frame, and a second sealing assembly covering the other open end of the module frame,
the first sealing assembly includes an inlet, which is a hole through which coolant flows into, and
the second sealing assembly includes an outlet, which is a hole through which coolant is discharged.

11. The battery module according to claim 10, wherein:
the inlet is located at a lower part than a center part on the basis of the height of the first sealing assembly, and
the outlet is located at an upper part than a center part on the basis of the height of the second sealing assembly.

12. The battery module according to claim 10, wherein:
the inlet and the outlet are located on the same line,
the inlet is located at an upper part than a center part on the basis of the height of the first sealing assembly, and
the outlet is located at an upper part than a center part on the basis of the height of the second sealing assembly.

13. The battery module according to claim 10, wherein:
the coolant is in direct contact with the battery cell stack and the busbar assembly housed inside the module frame.

14. The battery module according to claim 10, wherein:
the coolant is an insulating oil.

15. The battery module according to claim 1, wherein:
a first sealing member is interposed along an edge of the sealing assembly coupled with the opened both ends of the module frame.

16. The battery module according to claim 15, wherein:
the first sealing member is an adhesive tape.

17. The battery module according to claim 15, comprising:
a second sealing member located to fill a gap located at an area excluding the area sealed by the first sealing member, among the area between the module frame and the sealing assembly.

18. The battery module according to claim 1, comprising:
a third sealing member interposed along edges of the sealing assembly and the end plate.

19. The battery module according to claim 18, wherein:
the third sealing member is an epoxy resin.

20. The battery module according to claim 1, wherein:
the sealing assembly comprises a module venting part provided in one area of the sealing assembly,
the module venting part comprises,
a venting hole passing through the sealing assembly,
a module connection part, which is one hole communicating with the venting hole,
a fixing cover provided between the venting hole and the busbar assembly and fixed to the inner surface of the sealing assembly, and
a membrane provided between the venting hole and the fixing cover and fixed in contact with the fixing cover.

21. The battery module according to claim 20, wherein:
the module connection part protrudes from the sealing assembly in a direction opposite to the module frame, and
the battery module further comprises a venting protrusion part, which is an area surrounding the module connection part and protruding from the sealing assembly in a direction opposite to the module frame.

22. The battery module according to claim 21, wherein:
the end plate covering the module connection part and the sealing assembly provided with the protrusion part includes a venting opening, and
the venting opening is a hole passing through the end plate, and the module connection part and the protrusion part are located while passing through the venting opening.

23. A battery pack comprising:
the battery module according to claim 1, and
a pack venting part connected to the battery module.

24. The battery pack according to claim 23, wherein:
the pack venting part comprises,
a pack connection part connected to the battery module,
a direction adjustment part which is a pipe communicating with the pack connection part, and
a discharge port provided in one area of the side surface pack frame and connected to the direction adjustment part.

25. The battery pack according to claim 24, wherein:
the direction adjustment part is located inside the side surface pack frame,
one end of the direction adjustment part is closed, and the other end of the direction adjustment part is connected to the discharge port,
the pack connection part is one area protruding from one surface of the direction adjustment part toward the battery module.

26. The battery pack according to claim 25, wherein:
the pack connection part is connected to the module connection part of the battery module, and
the module connection part is a hole that communicates with the inside of the battery module.
